(19) Europäisches Patentamt
European Patent Office
Office européen des brevets

(11) **EP 4 679 764 A1**

(12) **EUROPEAN PATENT APPLICATION**
published in accordance with Art. 153(4) EPC

(43) Date of publication:
**14.01.2026 Bulletin 2026/03**

(21) Application number: **23926683.6**

(22) Date of filing: **10.03.2023**

(51) International Patent Classification (IPC):
*H04L 9/08* *(2006.01)*

(52) Cooperative Patent Classification (CPC):
**H04L 9/08**

(86) International application number:
**PCT/CN2023/080938**

(87) International publication number:
**WO 2024/187324 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Meng
Dongguan, Guangdong 523860 (CN)**
• **GAN, Lu
Dongguan, Guangdong 523860 (CN)**
• **SHI, Cong
Dongguan, Guangdong 523860 (CN)**

(74) Representative: **Taor, Simon Edward William
Venner Shipley LLP
200 Aldersgate
London EC1A 4HD (GB)**

(54) **KEY GENERATION METHODS, AND DEVICES**

(57) The present disclosure relates to a key generation method, a device, a computer-readable storage medium, a computer program product, and a computer program. The method includes the following. A first device sends multiple first messages to multiple second devices, where a different first message among the multiple first messages occupies a different time domain range, and the multiple first messages are used for the multiple second devices to generate keys. The first device receives multiple second messages sent by the multiple second devices, where a different second message among the multiple second messages is related to a key of a different second device. The first device sends multiple third messages to the multiple second devices, where a different third message among the multiple third messages is used for a different second device to determine a group key.

FIRST DEVICE SENDS MULTIPLE FIRST MESSAGES TO MULTIPLE SECOND DEVICES, WHERE DIFFERENT FIRST MESSAGE AMONG MULTIPLE FIRST MESSAGES OCCUPIES DIFFERENT TIME DOMAIN RANGE, AND MULTIPLE FIRST MESSAGES ARE USED FOR MULTIPLE SECOND DEVICES TO GENERATE KEYS — S310

FIRST DEVICE RECEIVES MULTIPLE SECOND MESSAGES SENT BY MULTIPLE SECOND DEVICES, WHERE DIFFERENT SECOND MESSAGE AMONG MULTIPLE SECOND MESSAGES IS RELATED TO KEY OF DIFFERENT SECOND DEVICE — S320

FIRST DEVICE SENDS MULTIPLE THIRD MESSAGES TO MULTIPLE SECOND DEVICES, WHERE DIFFERENT THIRD MESSAGE AMONG MULTIPLE THIRD MESSAGES IS USED FOR DIFFERENT SECOND DEVICE TO DETERMINE GROUP KEY — S330

**FIG. 3**

**Description**

TECHNICAL FIELD

This disclosure relates to the field of communication, in particular to a key generation method, a device, a computer-readable storage medium, a computer program product, and a computer program.

BACKGROUND

With the development of communication technology, a non-contact automatic identification technology has emerged. Generally, with such a technology, non-contact data transmission is performed between a zero-power device and a target device in a wireless radio frequency (RF) manner.

Since a communication channel between the zero-power device and the target device is an insecure channel, in order to ensure the security of data transmission between the zero-power device and the target device, a solution is further proposed to encrypt data or information transmitted between the zero-power device and the target device with a key. In this solution, both a single zero-power device and the target device usually use the same pairwise key (or referred to as "unicast key" or "shared key").

In the solution, only the security of data transmission between the single zero-power device and the target device is considered. In a scenario where there are multiple zero-power devices, there may be a need to share secret information between the target device and the multiple zero-power devices or between the multiple zero-power devices. How to improve the efficiency of sharing the secret information between the target device and the multiple zero-power devices or between the multiple zero-power devices, while ensuring the security of sharing the secret information between the target device and the multiple zero-power devices or between the multiple zero-power devices becomes a problem to be solved.

SUMMARY

Embodiments of the present disclosure provide a key generation method, a device, a computer-readable storage medium, a computer program product, and a computer program.

Embodiments of the present disclosure provide a key generation method. The method includes the following. A first device sends multiple first messages to multiple second devices, where a different first message among the multiple first messages occupies a different time domain range, and the multiple first messages are used for the multiple second devices to generate keys. The first device receives multiple second messages sent by the multiple second devices, where a different second message among the multiple second messages is related to a key of a different second device. The first device sends multiple third messages to the multiple second devices, where a different third message among the multiple third messages is used for a different second device to determine a group key.

Embodiments of the present disclosure provide a key generation method. The method includes the following. A target second device receives multiple first messages sent by a first device, where a different first message among the multiple first messages occupies a different time domain range. The target second device sends a target second message to the first device, where the target second message is related to a key of the target second device, the target second device is one of multiple second devices, and the key of the target second device is generated based on the multiple first messages. The target second device receives a target third message sent by the first device, where the target third message is used by the target second device to determine a group key.

Embodiments of the present disclosure provide a first device. The first device includes a first communication unit. The first communication unit is configured to send multiple first messages to multiple second devices, where a different first message among the multiple first messages occupies a different time domain range, and the multiple first messages are used for the multiple second devices to generate keys. The first communication unit is configured to receive multiple second messages sent by the multiple second devices, where a different second message among the multiple second messages is related to a key of a different second device. The first communication unit is configured to send multiple third messages to the multiple second devices, where a different third message among the multiple third messages is used for a different second device to determine a group key.

Embodiments of the present disclosure provide a target second device. The target second device includes a second communication unit. The second communication unit is configured to receive multiple first messages sent by a first device, where a different first message among the multiple first messages occupies a different time domain range. The second communication unit is configured to send a target second message to the first device, where the target second message is related to a key of the target second device, the target second device is one of multiple second devices, and the key of the target second device is generated based on the multiple first messages. The second communication unit is configured to receive a target third message sent by the first device, where the target third message is used by the target second device to determine a group key.

Embodiments of the present disclosure provide a first device. The first device includes a transceiver, a processor, and a memory. The memory is configured to store a computer program. The processor is configured to invoke and execute the computer program stored in the memory, to cause the first device to perform the foregoing method.

Embodiments of the present disclosure provide a target second device. The target second device includes a transceiver, a processor, and a memory. The memory is configured to store a computer program. The processor is configured to invoke and execute the computer program stored in the memory, to cause the target second device to perform the foregoing method.

Embodiments of the present disclosure provide a chip. The chip is configured to implement the foregoing method.

Specifically, the chip includes a processor. The processor is configured to invoke and execute a computer program stored in a memory, to cause a device equipped with the chip to perform the foregoing method.

Embodiments of the present disclosure provide a computer-readable storage medium. The computer-readable storage medium is configured to store a computer program which, when executed by a device, causes the device to perform the foregoing method.

Embodiments of the present disclosure provide a computer program product. The computer program product includes computer program instructions that cause a computer to perform the foregoing method.

Embodiments of the present disclosure provide a computer program. The computer program, when executed by a computer, causes the computer to perform the foregoing method.

With the solutions provided in embodiments of the present disclosure, the first device sends the multiple first messages to enable the multiple second devices to generate respective keys, receives the multiple second messages, each of which is related to the key of the corresponding second device, and then can send the multiple third messages, where the different third message among the multiple third messages is used for the different second device to determine the group key. In this way, the first device and the multiple second devices can share secret information based on the group key, which not only ensures security, but also improves the efficiency of sharing the secret information between the first device and the multiple second devices and/or between the multiple second devices, thereby filling a gap in the related art.

BRIEF DESCRIPTION OF THE DRAWINGS

FIG. 1 is a schematic diagram of an application scenario according to embodiments of the present disclosure.

FIG. 2 is a schematic diagram of a zero-power communication system based on backscattering.

FIG. 3 is a schematic flowchart of a key generation method according to an embodiment of the present disclosure.

FIG. 4 is a schematic flowchart of a key generation method according to another embodiment of the present disclosure.

FIG. 5 is an exemplary diagram illustrating a self-assembling cross-bit operation on a key of a target second device according to embodiments of the present disclosure.

FIG. 6 is a schematic diagram illustrating a correspondence between candidate quantization reference values and respective index values and respective quantization values according to embodiments of the present disclosure.

FIG. 7 is an exemplary flowchart illustrating a processing procedure of a key generation method according to an embodiment of the present disclosure.

FIG. 8 is a schematic diagram illustrating a processing scenario of a key generation method according to an embodiment of the present disclosure.

FIG. 9 is a schematic flowchart illustrating a processing procedure of updating a group key in a key generation method according to an embodiment of the present disclosure.

FIG. 10 is a schematic flowchart illustrating a processing procedure of updating a group key when a tag is added in a key generation method according to an embodiment of the present disclosure.

FIG. 11 and FIG. 12 are two exemplary diagrams each illustrating simulation experiment results of a key generation method according to embodiments of the present disclosure.

FIG. 13 is an exemplary diagram illustrating a comparison of a key bit error rate (BER) of a quantization solution adopted for a key generation method provided in embodiments of the present disclosure and key BERs of other quantization solutions.

FIG. 14 is a schematic block diagram of a first device according to an embodiment of the present disclosure.

FIG. 15 is a schematic block diagram of a target second device according to an embodiment of the present disclosure.

FIG. 16 is a schematic block diagram of a communication device according to embodiments of the present disclosure.

FIG. 17 is a schematic block diagram of a chip according to embodiments of the present disclosure.

FIG. 18 is a schematic block diagram of a communication system according to embodiments of the present disclosure.

## DETAILED DESCRIPTION

The following will describe technical solutions of embodiments of the present disclosure with reference to accompanying drawings in embodiments of the present disclosure.

The technical solutions of embodiments of the present disclosure may be applicable to various wireless communication systems, for example, a global system for mobile communication (GSM), code division multiple access (CDMA), wideband code division multiple access (WCDMA), a general packet radio service (GPRS), long-term evolution (LTE), an advanced LTE (LTE-A), a new radio (NR), an evolved NR, a wireless local area network (WLAN), a wireless fidelity (WiFi), or other communication systems.

Various embodiments of the present disclosure are described in connection with a network device and a terminal device. The terminal device may be mobile or fixed, and may also be referred to as a mobile station, a subscriber unit, etc. The terminal device may be a station in a WLAN, an intelligent terminal, a wireless modem, a pad, a laptop computer, etc. In embodiments of the present disclosure, the terminal may be a virtual reality (VR) terminal, an augmented reality (AR) terminal, a terminal in industrial control, a terminal in self-driving, a terminal in remote medicine, a terminal in smart grid, a terminal in transportation safety, a terminal in smart city, a wireless terminal in smart home, etc. By way of explanation rather than limitation, in embodiments of the present disclosure, the terminal device may also be a wearable device.

In embodiments of the present disclosure, the network device may be a device configured to communicate with a mobile device, and the network device may be an access point (AP) in a WLAN, a base station in GSM, CDMA, or WCDMA, or may be an evolutional Node B (eNB or eNodeB) in LTE, or a relay station, or an in-vehicle device, a wearable device, a network device (gNB) in an NR network, a network device in a future evolved public land mobile network (PLMN), a network device in an NTN, etc. By way of explanation rather than limitation, in embodiments of the present disclosure, the network device may be mobile. For example, the network device may be a mobile device.

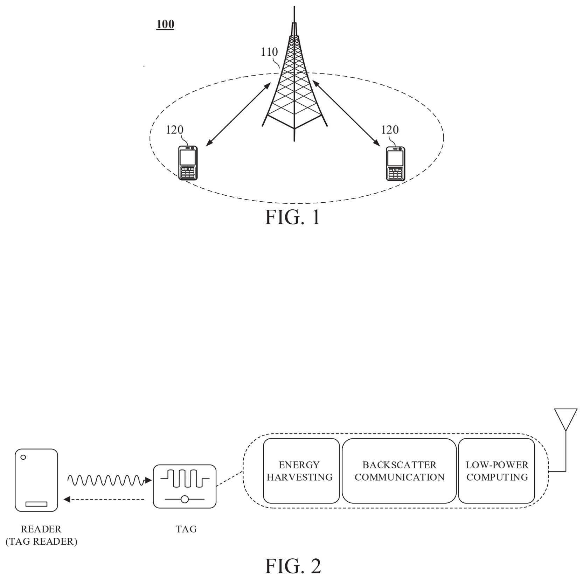

FIG. 1 exemplarily illustrates a communication system 100. The communication system 100 includes one network device 110 and two terminal devices 120. In a possible embodiment, the communication system 100 may include multiple network devices 110, and there may be other quantities of terminal devices 120 in the coverage of each network device 110, which is not limited in embodiments of the present disclosure. In a possible embodiment, the communication system 100 may also include other network entities such as a mobility management entity (MME), an access and mobility management function (AMF), etc., which is not limited in embodiments of the present disclosure. The network device may also include an access network (AN) device and a core network (CN) device. That is, the wireless communication system also includes multiple CNs for communication with the AN device. The AN device may be a base station in LTE, LTE-A, or an NR system. Taking the communication system illustrated in FIG. 1 as an example, the communication device may include the network device and the terminal device(s) that have communication functions. The communication device may also include other devices such as a network controller, an MME, or other network entities in the communication system, which is not limited in embodiments of the present disclosure.

To facilitate the understanding of embodiments of the present disclosure, basic processes and basic concepts involved in embodiments of the present disclosure are briefly described below. It may be understood that, the basic processes and basic concepts introduced below do not limit embodiments of the present disclosure.

Zero-power communication network is a wireless communication technology suitable for a short distance and a low rate. As illustrated in FIG. 2, a basic architecture of a zero-power system includes a reader and a tag. The tag can have functions such as energy harvesting, backscatter communication, low-power computing, etc. The tag is a type of zero-power device. It may be understood that, in actual scenarios, the zero-power device may also be an ordinary device, which is not limited herein. The primary technological advantage of the zero-power communication is battery-free communication.

In a zero-power communication system based on backscattering, the zero-power device backscatters a received (radio frequency) RF signal that is modulated and reflected by a transmitter, to transmit data, instead of generating an RF signal by itself. Based on energy sources and usages of the zero-power device, the zero-power device can be divided into the following types: a passive zero-power device, a semi-passive zero-power device, and an active zero-power device. The passive zero-power device does not require a built-in battery, instead, an antenna of the passive zero-power device generates an induced current through electromagnetic induction, and the induced current drives a low-power chip circuit of the passive zero-power device. The semi-passive zero-power device is not equipped with a conventional battery, but can use an RF energy harvesting module to harvest radio wave energy and store the harvested energy in an energy storage unit (such as a capacitor). After the energy is stored in the energy storage unit, the energy storage unit can drive a low-power chip circuit of the semi-passive zero-power device. The active zero-power device can have a built-in battery to drive a low-power chip circuit of the active zero-power device, so as to implement operations such as the demodulation of a forward link signal, the modulation of a reverse link signal, etc.

It may be understood that, the terms "system" and "network" herein are usually used interchangeably throughout this disclosure. The term "and/or" herein only describes an association between associated objects, and indicates that there may be three relationships, for example, A and/or B may mean A alone, both A and B exist, and B alone. In addition, the character "/" herein can indicate that the associated objects are in an "or" relationship. It can be understood that, "indication" referred to in embodiments of the present disclosure may be a direct indication, may be an indirect indication, or may mean that there is an association. For example, A indicates B may mean that A directly indicates B, for instance, B may be obtained according to A, may mean that A indirectly indicates B, for instance, A indicates C, and B may be obtained according to C, or may mean that there is an association between A and B. In the elaboration of embodiments of the present disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the present disclosure, the related art of embodiments of the present disclosure will be described below. The following related art, as an optional solution, may be arbitrarily combined with the technical solutions of embodiments of the present disclosure, which shall all belong to the protection scope of embodiments of the present disclosure.

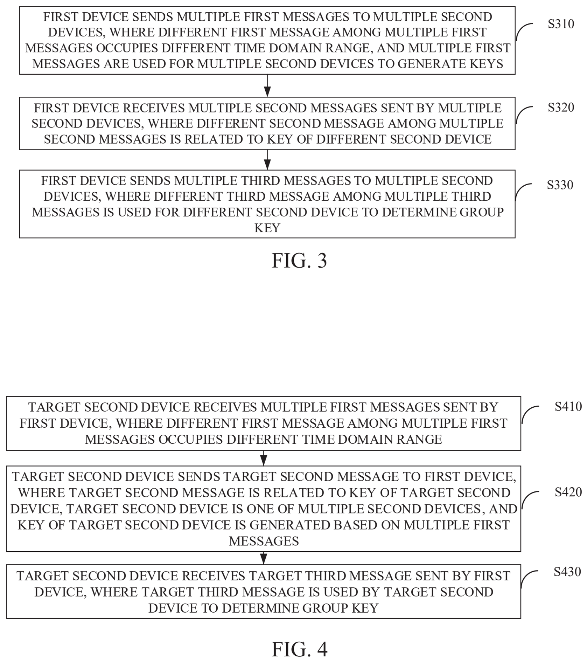

FIG. 3 is a schematic flowchart of a key generation method according to an embodiment of the present disclosure. The method includes at least part of the following content.

At S310, a first device sends multiple first messages to multiple second devices, where a different first message among the multiple first messages occupies a different time domain range, and the multiple first messages are used for the multiple second devices to generate keys.

At S320, the first device receives multiple second messages sent by the multiple second devices, where a different second message among the multiple second messages is related to a key of a different second device.

At S330, the first device sends multiple third messages to the multiple second devices, where a different third message among the multiple third messages is used for a different second device to determine a group key.

FIG. 4 is a schematic flowchart of a key generation method according to another embodiment of the present disclosure. The method includes at least part of the following content.

At S410, a target second device receives multiple first messages sent by a first device, where a different first message among the multiple first messages occupies a different time domain range.

At S420, the target second device sends a target second message to the first device, where the target second message is related to a key of the target second device, the target second device is one of multiple second devices, and the key of the target second device is generated based on the multiple first messages.

At S430, the target second device receives a target third message sent by the first device, where the target third message is used by the target second device to determine a group key.

The first device may be a first terminal or a first network device.

The multiple second devices can form a device group. The second device may be a zero-power device. The target second device is any one of the multiple second devices, and thus the target second device is also a zero-power device.

The group key is the same group key used for each of the multiple second devices.

The number (quantity) of multiple second devices is the same as the number of multiple second messages, and the multiple second messages are in one-to-one correspondence with the multiple second devices. The number of multiple third messages is also the same as the number of multiple second devices, and the multiple third messages are in one-to-one correspondence with the multiple second devices.

In some possible embodiments, before the first device sends the multiple third messages to the multiple second devices, the method further includes the following. The first device determines a verification key for each of the multiple second devices based on the multiple second messages. Based on a determination that the verification key for each of the multiple second devices is consistent with a key of the second device, the first device generates the group key based on the verification key for each of the multiple second devices.

Both the verification key for each second device and the key of each second device are in a binary format, and the group key is also in a binary format.

In a possible example, the first device generates the group key based on the verification key for each of the multiple second devices as follows. The first device obtains multiple keys to be calculated based on the verification key for each of the multiple second devices. The first device generates the group key by performing exclusive OR (XOR) operation on the multiple keys to be calculated.

The number of multiple keys to be calculated is the same as the number of multiple second devices, and the multiple keys to be calculated are in one-to-one correspondence with the multiple second devices. Lengths of verification keys for different second devices among the multiple second devices are the same, and a length of a verification key for any second device is the same as a length of the group key.

For example, any one of the multiple second devices is the target second device. The first device obtains the multiple keys to be calculated based on the verification key for each of the multiple second devices as follows. The first device obtains a target key to be calculated by adjusting, based on a preset algorithm, at least part of bits in a verification key for the target second device, where the target second device is one of the multiple second devices, and the target key to

EP 4 679 764 A1

be calculated is one of the multiple keys to be calculated.

Optionally, the preset algorithm may be a self-assembling cross-bit operation. Correspondingly, the first device can obtain the target key to be calculated by adjusting, based on the preset algorithm, at least part of the bits in the verification key for the target second device as follows. The first device obtains the target key to be calculated by adjusting, based on the self-assembling cross-bit operation, positions of at least part of the bits in the verification key for the target second device.

The self-assembling cross-bit operation is an operation that shifting higher-order bits and lower-order bits. Specifically, the first device can obtain the target key to be calculated by adjusting, based on the self-assembling cross-bit operation, the positions of at least part of the bits in the verification key for the target second device as follows. Based on the self-assembling cross-bit operation, the first device determines one or more to-be-adjusted higher-order bits and one or more to-be-adjusted lower-order bits in the verification key for the target second device, and determines a first target position for each of the one or more to-be-adjusted higher-order bits and a second target position for each of the one or more to-be-adjusted lower-order bits. The first device obtains the target key to be calculated by adjusting each of the one or more to-be-adjusted higher-order bits from a respective original position to the first target position and adjusting each of the one or more to-be-adjusted lower-order bits from a respective original position to the second target position.

Different to-be-adjusted higher-order bits among the one or more to-be-adjusted higher-order bits have different first target positions, and different to-be-adjusted lower-order bits among the one or more to-be-adjusted lower-order bits have different second target positions. It may be understood that, a sum of the number of one or more to-be-adjusted higher-order bits and the number of one or more to-be-adjusted lower-order bits may be less than or equal to a length of the verification key for the target second device (i.e., a total number of bits in the verification key for the target second device). In other words, positions of all bits in the verification key for the target second device are adjusted. Alternatively, the verification key for the target second device may contain certain bits that do not require position adjustment. For example, position adjustment may be not required for the first bit (i.e., the least significant bit (LSB)) and the last bit (i.e., the most significant bit (MSB)) in the verification key for the target second device.

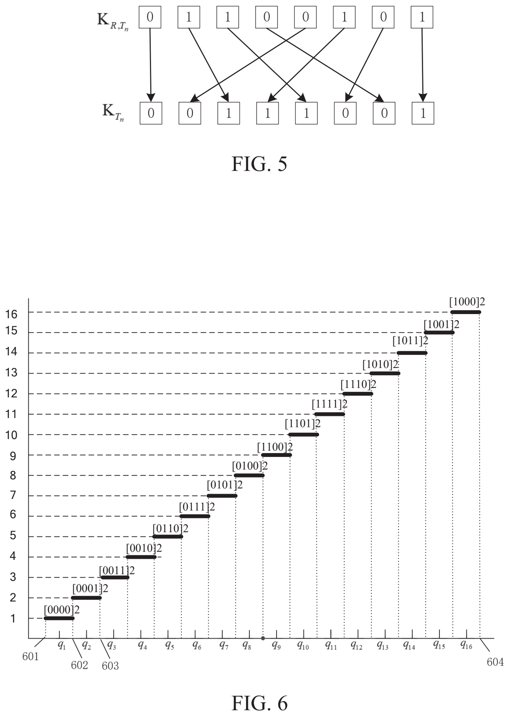

For example, the verification key for the target second device may be denoted as: $K_{R,T_n} = k_1 k_2 \dots k_L$, where $K_{R,T_n}$ denotes the verification key for the target second device, a subscript R in $K_{R,T_n}$ denotes the first device and $T_n$ in $K_{R,T_n}$ denotes the target second device, $n$ is an integer greater than or equal to 1 and less than or equal to $N$, $N$ is the number of multiple second devices, and $N$ is an integer greater than or equal to 2; $L$ is the length of the verification key for the target second device (i.e., the total number of bits in the key of the target second device), and $L$ can be an even number; and $k_i \in \{0,1\}$, $i$ is an integer greater than or equal to 1 and less than or equal to $L$, that is, the value of any bit ($k_i$) in the verification key for the target second device is 0 or 1. Correspondingly, the first device obtains the target key to be calculated by adjusting, based on the self-assembling cross-bit operation, the positions of at least part of the bits in the verification key for the target second device, which can be represented by the following formula: $K_{T_n} = Sac(K_{R,T_n}) = k_1 k_{L/2+1} k_2 k_{L/2+2} \dots k_{L/2} k_L$, where $K_{T_n}$ denotes the target key to be calculated, $Sac(K_{R,T_n})$ denotes the self-assembling cross-bit operation on the verification key for the target second device, "$k_1 k_{L/2+1} k_z k_{L/2+2} \dots k_{L/2} k_L$" denotes a specific form of the target key to be calculated obtained after adjusting the positions of at least part of the bits in the verification key for the target second device. An exemplary description is given with reference to FIG. 5. Assuming that the length of the verification key for the target second device is $L = 8$, and the verification key for the target second device is $K_{R,T_n} = 01100101$, then $K_{T_n} = Sac(K_{R,T_n}) = k_1 k_5 k_2 k_6 k_3 k_7 k_4 k_8 = 00111001$ can be obtained after the self-assembling cross-bit operation, that is, the target key to be calculated $K_{T_n}$ is "00111001".

A manner in which the multiple keys to be calculated are obtained by processing the verification key for each of the multiple second devices is the same as the manner in which the target key to be calculated is obtained by processing the verification key for the target second device, which will not be listed one by one.

In this example, the first device generates the group key by performing XOR operation on the multiple keys to be calculated, which can be represented by the following formula: $K_G = Sac(K_{R,T_1}) \oplus Sac(K_{R,T_2}) \oplus \dots \oplus Sac(K_{R,T_N})$, where $Sac()$ denotes a self-assembling cross-bit operation, $K_{R,T_1}$ to $K_{R,T_N}$ each denote the key of each of the multiple second devices, $N$ denotes the number of multiple second devices, and $N$ can be an integer greater than or equal to 2.

Optionally, the first device can obtain the target key to be calculated by adjusting, based on the preset algorithm, at least part of the bits in the verification key for the target second device as follows. The first device obtains the target key to be calculated by adjusting, based on the preset algorithm, values of at least part of the bits in the verification key for the target second device.

The preset algorithm can be set according to actual conditions. For example, the preset algorithm may be an XOR operation based on a preset sequence. The preset sequence can be configured according to actual conditions, and a length of the preset sequence is the same as the length of the verification key for any one of the multiple second devices.

Specifically, the first device can obtain the target key to be calculated by adjusting, based on the preset algorithm, the values of at least part of the bits in the verification key for the target second device as follows. The first device obtains the target key to be calculated by performing XOR operation based on the preset sequence and the verification key for the target second device. For example, assuming that the length of the key of the target second device is $L = 8$, the key of the target second device is $K_{R,T_n}$ = 01100101, and the length of the preset sequence is also 8, and the preset sequence is specifically S = 01010101, then $K_{T_n} = S \oplus K_{R,T_n}$ = 00001111 $\oplus$ 01100101 = 01101010, that is, the target key to be calculated $K_{T_n}$ is "01101010". A manner in which the multiple keys to be calculated are obtained by processing the verification key for each of the multiple second devices is the same as the manner in which the target key to be calculated is obtained by processing the verification key for the target second device, which will not be listed one by one.

In this example, assuming that the number of multiple keys to be calculated is $N$, then the first device generating the group key by performing XOR operation on the multiple keys to be calculated can be represented by the following formula: $K_G = K_{T_1} \oplus K_{T_2} \oplus ... \oplus K_{T_N}$, where $K_{T_1}$ to $K_{T_N}$ denote $N$ keys to be calculated.

The above is only an exemplary description. In other possible examples, the key of the target second device among the multiple second devices may be directly taken as the target key to be calculated among the multiple keys to be calculated. All possible examples are not exhaustively listed herein.

In a possible example, the first device generates the group key based on the verification key for each of the multiple second devices as follows. The first device obtains multiple sets of key elements of each of the multiple second devices based on the verification key for each of the multiple second devices. The first device generates an initial matrix based on the multiple sets of key elements of each of the multiple second devices. The first device generates the group key based on the initial matrix.

The target second device among the multiple second devices is taken as an example. The first device obtains the multiple sets of key elements of each of the multiple second devices based on the verification key for each of the multiple second devices, which can mean that the first device obtains the multiple sets of key elements of the target second device by dividing, according to a first length, the verification key for the target second device.

Any one set of the multiple sets of key elements are binary key elements. The first length can be a length set according to actual conditions, for example, may be 4 bits, or may be longer or shorter, which is not exhaustively listed herein. The target second device is any one of the multiple second devices, and the processing of the key of each of the multiple second devices is the same as that of the target second device, which will not be listed one by one.

The first device generates the initial matrix based on the multiple sets of key elements of each of the multiple second devices as follows. The first device converts the multiple sets of key elements of each of the multiple second devices into multiple values, and generates the initial matrix based on the multiple values corresponding to each of the multiple second devices.

The number of multiple values is the same as the number of multiple sets of key elements, that is, each set of key elements is converted to one corresponding value. Assuming that the multiple sets of key elements are specifically M sets of key elements, the multiple values are specifically $M$ values, and $M$ is an integer greater than or equal to 2. Taking the target second device among the multiple second devices as an example, the first device can convert the multiple sets of key elements of each of the multiple second devices into the multiple values as follows. The first device converts the m-th set of key elements among M sets of key elements of the target second device into the m-th value, where $m$ is a positive integer less than or equal to $M$, and the m-th value is a decimal value. The processing of each set of the M sets of key elements of the target second device is the same as that of the m-th set of key elements, which will not be listed one by one. The processing of the key of each of the second devices is the same as that of the target second device, which will not be listed one by one. In the following embodiments, unless otherwise specified, the multiple sets of key elements have the same meaning as the $M$ sets of key elements, and the multiple values have the same meaning as the M values, which will not be repeated below.

The number of rows of the initial matrix and the number of columns of the initial matrix are related to the number of multiple second devices and the number of multiple values. Specifically, assuming that the number of multiple second devices is $N$, and the number of multiple values is M, then the initial matrix contains $N$ rows, a different row among the $N$ rows corresponds to a different second device among the $N$ second devices, and each of the $N$ rows contains M values corresponding to one second device. In the following embodiments, unless otherwise specified, the multiple second devices have the same meaning as the $N$ second devices, which will not be repeated.

For example, it is assumed that M values corresponding to the target second device are denoted as

$$K'_{R,T_n} = [k_{n,1}, k_{n,2}, ..., k_{n,M}],$$ where $K'_{R,T_n}$ denotes a set of M values corresponding to the target second device, a subscript R in $K'_{R,T_n}$ denotes the first device and $T_n$ in $K'_{R,T_n}$ denotes the target second device, $n$ is an integer greater than or equal to 1 and less than or equal to N, and $k_{n,1}$ to $k_{n,M}$ denote the $M$ values corresponding to the target second device. Correspondingly, the initial matrix contains $N$ rows, a different row among the $N$ rows corresponds to a different second device among the $N$ second devices, and each of the $N$ rows contains $M$ values corresponding to one second device. The initial matrix may be denoted as: $K = \begin{bmatrix} k_{1,1} & \cdots & k_{1,M} \\ \vdots & \ddots & \vdots \\ k_{N,1} & \cdots & k_{N,M} \end{bmatrix}_{N \times M}$, where K denotes the initial matrix, the initial matrix is specifically an

$N \times M$ matrix, $M$ values $k_{1,1}$ to $k_{1,M}$ in the first row of the initial matrix $K$ denote $M$ values corresponding to the first second device among the $N$ second devices, and $M$ values $k_{N,1}$ to $k_{N,M}$ in the N-th row of the initial matrix K denote M values corresponding to the N-th second device among the $N$ second devices.

The first device generates the group key based on the initial matrix in one of the following manners.

Manner 1, the first device obtains one or more sub-matrices based on the initial matrix, determines an eigenvalue of each of the one or more sub-matrices, and generates the group key by quantizing the eigenvalue of each of the one or more sub-matrices.

Manner 2, the first device obtains multiple singular values of the initial matrix by performing singular value decomposition (SVD) on the initial matrix, and generates the group key by quantizing the multiple singular values.

The two manners are explained respectively.

Manner 1 is particularly suitable for a case where $N$ is less than or equal to $M$. The descriptions of $N$ and $M$ are the same as those in the foregoing embodiment, which will not be repeated.

The first device can obtain the one or more sub-matrices based on the initial matrix as follows. In the case where the $((t-1) \times N + 1)$-th column of the initial matrix is taken as a starting position and the $((t-1) \times N + 1)$-th column of the initial matrix is followed by N-1 columns of values, the first device extracts $N$ rows of values from the $((t-1) \times N + 1)$-th column to the $(t \times N)$-th column from the initial matrix as the t-th sub-matrix. Alternatively, in the case where the $((t-1) \times N + 1)$-th column of the initial matrix is taken as a starting position and the number of remaining columns following the $((t-1) \times N + 1)$-th column is less than N-1, the first device extracts $N$ rows of values in the $((t-1) \times N + 1)$-th column and the following remaining columns from the initial matrix, as values of the first one or more columns of the t-th sub-matrix, and then fills the rest element positions with zeros, so as to form $N$ columns of the *t*-th sub-matrix, thereby obtaining the t-th sub-matrix.

The t-th sub-matrix has the same number of rows and columns, both equal to $N$, where t is a value greater than or equal to 1 and less than or equal to a value of rounding up $M/N$. Rounding up $M/N$ can be represented by a formula $\lceil M/N \rceil$, where $\lceil \ \rceil$ denotes rounding up (or taking the ceiling of). That is to say, the total number of sub-matrices can be equal to $\lceil M/N \rceil$, and the t-th sub-matrix is one of the $\lceil M/N \rceil$ sub-matrices. A manner of obtaining each of the $\lceil M/N \rceil$ sub-matrices is the same as that of the t-th sub-matrix, which will not be listed one by one.

For example, assuming that $N$ is equal to 3 and $M$ is equal to 8, that is, the initial matrix is a 3*8 matrix, for example, then the initial matrix is denoted as:

$$K = \begin{bmatrix} k_{1,1} & k_{1,2} & k_{1,3} & k_{1,4} & k_{1,5} & k_{1,6} & k_{1,7} & k_{1,8} \\ k_{2,1} & k_{2,2} & k_{2,3} & k_{2,4} & k_{2,5} & k_{2,6} & k_{2,7} & k_{2,8} \\ k_{3,1} & k_{3,2} & k_{3,3} & k_{3,4} & k_{3,5} & k_{3,6} & k_{3,7} & k_{3,8} \end{bmatrix}$$, and the initial

matrix can be divided into [8/3] = 3 sub-matrices.

For example, t is equal to 1, and the first sub-matrix is obtained as follows. In the case where the first column of the initial matrix is taken as the starting position and the first column of the initial matrix is followed by two columns of values, the first device extracts three rows of values from the first column to the third column from the initial matrix as the first sub-matrix. For example, the first sub-matrix can be denoted as $K_1 = \begin{bmatrix} k_{1,1} & k_{1,2} & k_{1,3} \\ k_{2,1} & k_{2,2} & k_{2,3} \\ k_{3,1} & k_{3,2} & k_{3,3} \end{bmatrix}$, where $k_{1,1}$, $k_{1,2}$, and $k_{1,3}$ are values from the first column to the third column in the first row of the initial matrix, values in the second row of the first sub-matrix are values from the first column to the third column in the second row of the initial matrix, and values in the third row of the first sub-matrix are values from the first column to the third column in the third row of the initial matrix, which will not be repeated.

For example, t is equal to 2, and a manner of obtaining the second sub-matrix is the same as that of obtaining the first sub-matrix. The second sub-matrix can be denoted as $K_2 = \begin{bmatrix} k_{1,4} & k_{1,5} & k_{1,6} \\ k_{2,4} & k_{2,5} & k_{2,6} \\ k_{3,4} & k_{3,5} & k_{3,6} \end{bmatrix}$, where $k_{1,4}$, $k_{1,5}$, and $k_{1,6}$ are values from the fourth column to the sixth column in the first row of the initial matrix, values in the second row of the second sub-matrix are values from the fourth column to the sixth column in the second row of the initial matrix, and values in the third row of the second sub-matrix are values from the fourth column to the sixth column in the third row of the initial matrix, which will not be repeated.

For example, t is equal to 3, and the third sub-matrix is obtained as follows. In the case where the $((t-1) \times N + 1 = 7)$-th column of the initial matrix is taken as the starting position, the number of remaining columns subsequent to the 7-th column of the initial matrix is equal to 1, and 1 is less than (N-1)=2, the first device extracts three rows of values from the 7-th column to the 8-th column from the initial matrix as three rows of values in first two columns of the third sub-matrix, and fills three rows of values in the last remaining column of the third sub-matrix with zeros, thereby obtaining the third sub-matrix.

For example, the third sub-matrix can be denoted as $K_3 = \begin{bmatrix} k_{1,7} & k_{1,8} & 0 \\ k_{2,7} & k_{2,8} & 0 \\ k_{3,7} & k_{3,8} & 0 \end{bmatrix}$, where $k_{1,7}$ $k_{1,8}$ are values from the 7-th column to 8-th column in the first row of the initial matrix, and a value in the last column in the first row of the third sub-matrix is filled with 0, values in the second row of the third sub-matrix are values from the 7-th column to 8-th column in the second row of the initial matrix and 0 filled in the last column, and values in the third row of the third sub-matrix are values from the 7-th column to 8-th column in the third row of the initial matrix and 0 filled in the last column, which will not be repeated.

The eigenvalue of each of the one or more sub-matrices can be determined as follows. A formula $g(\lambda) = |\lambda E - K_t^T|$ is used for calculating an eigenvalue of the $t$-th sub-matrix among the one or more sub-matrices, where g($*$) denotes an eigenvalue calculation function, the number of eigenvalues of the t-th sub-matrix may be one or more, $\lambda$ denotes the eigenvalue of the $t$-th sub-matrix, it may be understood that $\lambda$ can denote a sequence composed of eigenvalues, E denotes a unit matrix, $K_t^T$ denotes a transpose of the t-th sub-matrix, and $|*|$ denotes the calculation of an absolute value. Since the t-th sub-matrix is one of the one or more sub-matrices, a manner of calculating the eigenvalue of each of the one or more sub-matrices is the same as the manner of calculating the eigenvalue of the t-th sub-matrix, which will not be repeated.

Since channels for different second devices among the $N$ second devices are independent of one another, various values (or referred to as "elements") in the initial matrix obtained based on verification keys for the $N$ second devices are independent of one another. When $t$ is not equal to $\lceil M/N \rceil$, values in the $t$-th sub-matrix are also independent of one another, that is, any sub-matrix has full rank. Thus, the number of eigenvalues of the t-th sub-matrix is equal to $N$, where the eigenvalues of the t-th sub-matrix can be denoted as $\{\lambda_{t,1}, \lambda_{t,2}, ..., \lambda_{t,N}\}$. More specifically, the eigenvalues of the t-th sub-matrix can be $N$ values on the diagonal of the $t$-th sub-matrix.

When $t$ is equal to $\lceil M/N \rceil$, that is, the $t$-th sub-matrix is the last sub-matrix, if $M$ is an integer multiple of $N$, the t-th sub-matrix (i.e., the ($\lceil M/N \rceil$)-th sub-matrix) is also of full rank, and the number of eigenvalues of the t-th sub-matrix is also equal to $N$, where the eigenvalues of the t-th sub-matrix can be denoted as $\{\lambda_{t,1}, \lambda_{t,2}, ..., \lambda_{t,N}\}$. If $M$ is not the integer multiple of $N$, a rank of the t-th sub-matrix (i.e., the ($\lceil M/N \rceil$)-th sub-matrix) can be denoted as rank($K_t$) = MmodN, that is, the number of eigenvalues of the $t$-th sub-matrix is equal to a remainder of $M$ divided by $N$ (i.e., MmodN), where the eigenvalues of the t-th sub-matrix (i.e., the ($\lceil M/N \rceil$)-th sub-matrix) is denoted as $\{\lambda_{\lceil M/N \rceil,1}, \lambda_{\lceil M/N \rceil,2}, ..., \lambda_{\lceil M/N \rceil,MmodN}\}$.

The group key can be generated by quantizing the eigenvalue of each of the one or more sub-matrices as follows. Multiple sorted eigenvalues are obtained by sorting one or more eigenvalues of each sub-matrix. The group key is obtained by quantizing the multiple sorted eigenvalues.

As can be seen from the above description, except the last sub-matrix, the number of eigenvalues that can be obtained from each of first ($\lceil M/N \rceil - 1$) sub-matrices is $N$, and the number of eigenvalues that can be obtained from the ($\lceil M/N \rceil$)-th sub-matrix is $MmodN$, and therefore, the total number of eigenvalues that can be obtained from $\lceil M/N \rceil$ sub-matrices is equal to $M$, i.e., $(\lceil M/N \rceil - 1) \times N + MmodN = M$.

The multiple sorted eigenvalues may be obtained by sorting the one or more eigenvalues of each sub-matrix as follows. The one or more eigenvalues of each sub-matrix are sorted based on an order of the one or more sub-matrixes, so as to obtain the multiple sorted eigenvalues. For example, $N$ eigenvalues of the first sub-matrix are ranked first, and $MmodN$ eigenvalue(s) of the last sub-matrix is ranked last, thus obtaining the M sorted eigenvalues. It may be understood that, in addition to sorting the one or more eigenvalues of each sub-matrix based on the order of the one or more sub-matrixes, the M sorted eigenvalues may also be obtained by sorting the one or more eigenvalues of each sub-matrix based on a preset order. The preset order can be configured according to actual situations. For example, the preset order may be an order of one or more sub-matrixes from back to front, may be an order of sub-matrixes first in odd positions and then in even positions, etc., which are not exhaustively listed herein.

The specific quantizing manner in the foregoing processing is not limited in embodiments of the present disclosure. However, in embodiments of the present disclosure, the number of binary bits obtained from quantization of each eigenvalue is limited to the first length (e.g., 4 bits, or longer or shorter).

Manner 2 is particularly suitable for a case where $N$ is greater than $M$.

The specific number of multiple singular values can be equal to $M$.

Specifically, the multiple singular values of the initial matrix can be obtained by performing SVD on the initial matrix as follows. Two orthogonal matrices and one diagonal matrix are obtained by performing SVD on the initial matrix.

Values (or elements) on the diagonal of the diagonal matrix are taken as the multiple singular values of the initial matrix.

For example, assuming that the initial matrix is denoted as K, the initial matrix K is specifically a $N \times M$ matrix, then $K = U_{N \times N} \Sigma_{N \times M} V_{M \times M}$ can be obtained by performing SVD on the initial matrix $K$, where $U_{N \times N}$ and $V_{M \times M}$ are the two orthogonal matrices, $\Sigma_{N \times M} = \begin{bmatrix} \Sigma_{r \times r} & 0 \\ 0 & 0 \end{bmatrix}$, and $\Sigma_{r \times r} = \begin{bmatrix} \sigma_1 & 0 & 0 \\ 0 & \ddots & 0 \\ 0 & 0 & \sigma_r \end{bmatrix}$ is the diagonal matrix. Specifically, $r = rank(K)$. Since the channels for different second devices among the $N$ second devices are independent of one another, various values (or referred to as "elements") in the initial matrix obtained based on verification keys for the $N$ second devices are independent of one another, that is, the initial matrix K is of full rank, i.e., $r = rank(K) = M$. The elements on the diagonal of the diagonal matrix are denoted as $\{\sigma_1, \sigma_2, ..., \sigma_r\}$. Since $r$ is equal to M, $\{\sigma_1, \sigma_2, ..., \sigma_r\}$ is specifically $\{\sigma_1, \sigma_2, ..., \sigma_M\}$, i.e., $M$ singular values of the initial matrix K.

A specific manner of quantizing the multiple singular values of the initial matrix to generate the group key is not limited in embodiments of the present disclosure. However, in embodiments of the present disclosure, the number of binary bits obtained from quantization of each eigenvalue is limited to the first length (e.g., 4 bits, or longer or shorter).

In some possible embodiments, each of the multiple third messages contains calculation information of a group key for a corresponding second device.

The target second device is still taken as an example. The target third message among the multiple third messages contains calculation information of a group key for the target second device, where the target second device is one of the multiple second devices, and the calculation information of the group key for the target second device is obtained by performing XOR operation based on the verification key for the target second device and the group key.

Specifically, the first device generates the calculation information of the group key for the target second device as follows. The first device obtains the calculation information of the group key for the target second device by performing XOR operation on the group key and the verification key for the target second device. For example, a calculation manner for the first device to obtain the calculation information of the group key for the target second device can be represented by: $K_n = K_G \oplus K_{R,T_n}$, where $K_G$ is the group key, $K_{R,T_n}$ is the verification key for the target second device, $\oplus$ is an XOR operator, and $K_n$ is the calculation information of the group key for the target second device.

Correspondingly, after the target second device receives the target third message sent by the first device, the method can further include the following. The target second device obtains the group key by performing XOR operation on the calculation information of the group key for the target second device and the key of the target second device. For example, a calculation manner for the target second device to obtain the group key can be represented by: $K_G = K_n \oplus K_{T_n,R}$, where $K_{T_n,R}$ is the key of the target second device. Since the target second device is any one of the multiple second devices, the processing at each of the multiple second devices is the same as that at the target second device, which will not be listed one by one.

Further, after the target second device obtains the group key, the method can further include the following. The target second device sends a target response message to the first device, where the target response message carries target specified information encrypted with the group key, and the target specified information at least contains an electronic product code (EPC) of the target second device. It may be understood that, the target specified information may also contain other contents in addition to the EPC of the target second device, which are not exhaustively listed herein.

Correspondingly, after the first device sends the multiple third messages to the multiple second devices, the method can further include the following. In the case where the first device receives the target response message sent by the target second device, the first device obtains the target specified information by parsing, based on the group key, the target response message, and determines that the group key is successfully received by the target second device. Since each second device performs the same procedure as the target second device, the first device can determine, based on a response message sent by each second device, that the group key is successfully received by each second device, which will not be repeated herein.

In some possible embodiments, the first device can generate the group key only based on a determination that the verification key for each second device is consistent with the key of each second device. In the following, a manner for each second device to generate the key and a manner for the first device to generate the verification key for each second device will be illustrated, respectively.

The key of each second device is generated based on the multiple first messages.

Specifically, the first device can send the multiple first messages to the multiple second devices as follows. The first device periodically sends the multiple first messages to the multiple second devices during a coherence time.

The multiple first messages are broadcast. Correspondingly, each of the multiple second devices receives the multiple first messages. The number of multiple first messages used for generating the key of each second device can be $M$.

A duration of the above period can be set according to actual conditions, for example, may be 1 millisecond (ms), 0.5 ms, or longer or shorter, which are not exhaustively listed herein. A duration of the coherence time may be greater than a duration of M periods or longer, which is not limited in embodiments of the present disclosure. A duration of each of the multiple first messages may be the same or different, and a duration of any first message is not greater than the duration of the period. In a preferred example, different first messages have the same duration. Any one of the multiple first messages may be a query repeat (*QueryRep*) message. In addition, whether the first message carries data is not limited in embodiments of the present disclosure.

Optionally, a transmission power of each of the multiple first messages is a random transmission power, that is, the first device sends the multiple first messages each with the random transmission power. For example, any one of the multiple first messages is denoted as the *a*-th (*a* is an integer greater than or equal to 1 and less than or equal to *M*) first message, and a transmission power of the *a*-th first message is randomly selected by the first device from

$$0 \leq RSSI_{CW}^{a} \leq RSSI_{CW}^{\max}$$, where $RSSI_{CW}^{a}$ denotes the transmission power of the *a*-th first message, $RSSI_{CW}^{\max}$ denotes the maximum transmission power, and a received signal strength indicator (RSSI) denotes a strength indicator of a received signal.

Optionally, different first messages among the multiple first messages have different transmission powers.

In a case, the transmission power of each of the multiple first messages may be preset, and different first messages have different transmission powers. For example, the multiple first messages are specifically *M* first messages, the first device is pre-configured with *M* preset transmission powers which are different. When the first device sends the *a*-th first message among the M first messages, the first device can select the *a*-th preset transmission power from the M preset transmission powers as the transmission power of the *a*-th first message. In this case, the M preset transmission powers may be preset by an administrator on the first device according to actual needs, or may be configured by a fourth device for the first device. The fourth device may be any one of a second AN device, a second terminal, a CN device, and an application function (AF), which is not limited in embodiments of the present disclosure.

In another case, the transmission power of each of the multiple first messages is randomly selected by the first device from 0 to the maximum transmission power, and different first messages among the multiple first messages have different transmission powers. The processing of the *a*-th first message is taken as an example. The first device randomly selects one power value from 0 to the maximum transmission power, and determines whether the power value is the same as the transmission power of any one of *a*-1 first messages sent before the *a*-th first message. If the power value is different from all of transmission powers of the *a*-1 first messages that have been sent, the power value is taken as the transmission power of the *a*-th first message. Otherwise, the first device randomly reselects one power value from 0 to the maximum transmission power until a power value that is different from all of the transmission powers of the *a*-1 first messages that have been sent is selected.

Since the processing for each of the multiple second devices to generate the key is the same, in the following, the processing for the target second device to generate the key will be illustrated by taking any second device as the target second device as an example.

After the target second device receives the multiple first messages sent by the first device, the method further includes the following. The target second device generates the key of the target second device based on received strength of each of the multiple first messages.

The target second device generates the key of the target second device based on the received strength of each of the multiple first messages as follows. The target second device obtains average received strength based on the received strength of each of the multiple first messages. Based on the average received strength and the received strength of each of the multiple first messages, the target second device obtains multiple processed signal-strength. The target second device obtains multiple quantization reference values based on the multiple processed signal-strength. The target second device generates the key of the target second device by quantizing the multiple quantization reference values.

For example, any one of the multiple first messages is denoted as the *a*-th first message, and the target second device can obtain received strength of the *a*-th first message as follows. The target second device obtains multiple measurement values of the *a*-th first message by performing multiple measurements within a duration of the *a*-th first message, and obtains the received strength of the *a*-th first message by averaging the multiple measurement values of the *a*-th first message, where *a* is an integer greater than or equal to 1 and less than or equal to *M*. A manner for the target second device to obtain the received strength of each of the multiple first message is the same as the manner for the target second device to obtain the received strength of the *a*-th first message, which will not be listed one by one. The multiple measurements performed by the target second device within the duration of the *a*-th first message can be executed by the target second device according to a preset measurement period, where a duration of the measurement period is less than a duration of any message. For example, if the duration of any message is 1 millisecond, the measurement period may be 0.1 ms, 0.05 ms, or longer or shorter, which are not exhaustively listed herein.

The target second device can obtain the multiple processed signal-strength based on the average received strength and the received strength of each of the multiple first messages as follows. The target second device obtains the multiple processed signal-strength by subtracting the average received strength from the received strength of each of the multiple first messages. It may be understood that, the number of multiple processed signal-strength is the same as the number of multiple first messages.

For example, both the number of multiple processed signal-strength and the number of multiple first messages are denoted as *M,* and received strength of each of the M first messages obtained by the target second device is denoted as: $\left\{ RSSI_{R,T_n}^a \right\} = \left\{ RSSI_{R,T_n}^1, RSSI_{R,T_n}^2, ..., RSSI_{R,T_n}^M \right\}$ , where R denotes the first device, $T_n$ denotes the target

second device, $\left\{ RSSI_{R,T_n}^a \right\}$ denotes a set composed of the received strength of each of the M first messages, *a* is an integer greater than or equal to 1 and less than or equal to *M,* and $RSSI_{R,T_n}^1$ to $RSSI_{R,T_n}^M$ each denote the received strength of each of the M first messages obtained by the target second device. Further, assuming that the average received strength obtained by the target second device based on the received strength of each of the M first messages is denoted as

$RSSI_{R,T_n}^{ave}$ , then the target second device can obtain M processed signal-strength by subtracting the average received strength from the received strength of each of the M first message according to:

$$\left\{ \overline{RSSI_{R,T_n}^a} \right\} = \left\{ RSSI_{R,T_n}^1 - RSSI_{R,T_n}^{ave}, RSSI_{R,T_n}^2 - RSSI_{R,T_n}^{ave}, ..., RSSI_{R,T_n}^M - RSSI_{R,T_n}^{ave} \right\},$$

where $\left\{ \overline{RSSI_{R,T_n}^a} \right\}$ denotes a set of the M processed signal-strength.

The target second device obtains the multiple quantization reference values based on the multiple processed signal-strength as follows. The target second device sequentially calculates an absolute value of a difference between the m-th processed signal-strength and each of multiple candidate quantization reference values contained in a quantization reference set. The target second device selects the minimum absolute value from the absolute value of the difference between the m-th processed signal-strength and each of the multiple candidate quantization reference values, and takes a candidate quantization reference value corresponding to the minimum absolute value as the m-th quantization reference value, where the m-th quantization reference value is one of the multiple quantization reference values, the m-th processed signal-strength is one of the multiple processed signal-strength, and *m* is a positive integer. A manner of determining each of the multiple quantization reference values is the same as the manner of determining the m-th quantization reference value, which will not be listed one by one.

For example, the specific processing of obtaining the m-th quantization reference value can be represented by the following formula: $\overline{\overline{RSSI_{R,T_n}^m}} = argmin_{q \in Q_n} \left| q - \overline{RSSI_{R,T_n}^m} \right|$ , where *argmin* denotes a value of a variable at which the objective function attains its minimum, the variable is *q,* the objective function is $\left| q - \overline{RSSI_{R,T_n}^m} \right|$, the objective function $\left| q - \overline{RSSI_{R,T_n}^m} \right|$ represents an absolute value of a difference between the variable q and the m-th processed signal-strength among the multiple processed signal-strength, $Q_n$ denotes a quantization reference set for the target

second device, q $\in Q_n$ represents that the variable *q* is a candidate quantization reference value in the set $Q_n$, $\overline{RSSI_{R,T_n}^m}$

denotes the m-th processed signal-strength, and $\overline{\overline{RSSI_{R,T_n}^m}}$ denotes the m-th quantization reference value. Finally, the multiple quantization reference values are obtained. Assuming that the number of multiple quantization reference values is *M,* then *M* quantization reference values can be denoted as $\left\{ \overline{\overline{RSSI_{R,T_n}^1}}, ......, \overline{\overline{RSSI_{R,T_n}^M}} \right\}$ .

The quantization reference set can contain a specified number of candidate quantization reference values. The specified number of candidate quantization reference values is listed in an ascending order, and each candidate quantization reference value corresponds to one index value in the quantization reference set. Any two adjacent candidate quantization reference values among the specified number of candidate quantization reference values have the same interval, that is, the specified number of candidate quantization reference values is equally spaced. The specified number can be configured according to actual conditions, for example, may be 16, 24, or larger or smaller, which is not limited in embodiments of the present disclosure. Exemplarily, the quantization reference set can be denoted as: $Q_n$ = {$q_1$, $q_2$, ..., $q_W$}, where $Q_n$ denotes the quantization reference set for the target second device, 1 to W each denotes an index value of each candidate quantization reference value in the quantization reference set, *W* denotes the specified number, *W* is an integer greater than 1, $q_1$ to $q_W$ denote *W* candidate quantization reference values, the W candidate quantization reference values are listed in the ascending order, and any two adjacent candidate quantization reference values have the same interval.

The quantization reference set can be determined by the target second device based on the received strength of each of the multiple first messages. Specifically, the target second device can generate the quantization reference set as follows. The target second device determines the maximum received strength and the minimum received strength among the received strength of each of the multiple first messages. The target second device divides the specified number of intervals between the maximum received strength and the minimum received strength. The target second device selects a middle value in each of the specified number of intervals as one of the specified number of candidate quantization reference values contained in the quantization reference set. In each of the specified number of intervals, a difference between the maximum value and the minimum value is the same. An example is given with reference to FIG. 6. Assuming that the specified number is 16, a horizontal axis in FIG. 6 represents the candidate quantization reference value, the leftmost point 601 on the horizontal axis represents the minimum received strength, and the rightmost point 604 on the horizontal axis represents the maximum received strength. Assuming that 601~602 denotes the first interval and 602~603 denotes the second interval, then it can be seen that the first interval and the second interval are of the same size, that is, a difference between the maximum value and the minimum value of each of the two intervals is the same. Other intervals are not repeated. $q_1$ is the middle value of the first interval, and $q_1$ is the first candidate quantization reference value. Similarly, $q_2$ to $q_{16}$ are the second to the sixteenth candidate quantization reference values, respectively, and each is a middle value of the respective interval. As illustrated in FIG. 6, an interval between any two adjacent candidate quantization reference values is the same. Finally, 16 candidate quantization reference values in the quantization reference set can be obtained, and the quantization reference set can be denoted as $Q_n = \{q_1, q_2, ..., q_{16}\}$.

The target second device generates the key of the target second device by quantizing the multiple quantization reference values as follows. The target second device determines multiple quantization results based on an index value of each of the multiple quantization reference values. The target second device generates the key of the target second device based on the multiple quantization results. A length of each of the multiple quantization results is the first length.

Specifically, the target second device can obtain the index value of each of the multiple quantization reference values as follows. The target second device inputs the m-th quantization reference value among the multiple quantization reference values into a preset classification formula, to obtain an index value of the m-th quantization reference value output from the preset classification formula, where the index value can refer to an index value corresponding to the m-th quantization reference value in the quantization reference set. For example, the preset classification formula can be represented by $f_2\left(\overline{RSSI_{R,T_n}^m}\right) = w$, where $f_2(*)$ denotes a calculation function of the preset classification formula, $\overline{RSSI_{R,T_n}^m}$ denotes the m-th quantization reference value, w denotes the index value, and w is an integer greater than or equal to 1 and less than or equal to W. A manner of determining the index value of each quantization reference value is the same as the manner of determining the index value of the m-th quantization reference value, which will not be listed one by one.

The target second device can determine the multiple quantization results based on the index value of each of the multiple quantization reference values as follows. The target second device determines, based on a quantization mapping relationship, a quantization value corresponding to the index value of each of the multiple quantization reference values, and then takes the quantization value corresponding to the index value of each of the multiple quantization reference values as the multiple quantization results. Alternatively, the target second device inputs the index value of each of the multiple quantization reference values into an encoder, to obtain the quantization value corresponding to each of the multiple quantization reference values output by the encoder, respectively, and then takes the quantization value corresponding to the index value of each of the multiple quantization reference values as the multiple quantization results.

The quantization mapping relationship can include W candidate index values and candidate quantization values respectively corresponding to the W candidate index values, and the quantization mapping relationship can be preset according to actual conditions. Taking FIG. 6 as an example, assuming that *W* is equal to 16, and a vertical axis in FIG. 6 denotes 16 candidate index values, then the quantization mapping relationship specifically includes: a candidate quantization value corresponding to candidate index value 1 is 0000, a candidate quantization value corresponding to candidate index value 2 is 0001, a candidate quantization value corresponding to candidate index value 3 is 0011, and so on, and 16 candidate index values and respective candidate quantization values illustrated in FIG. 6 are not listed one by one. In addition, in FIG. 6, the candidate quantization value corresponding to candidate index value "1" is denoted as [0000]2, where[0000]2 denotes a set of binary bit values 0000, and other candidate quantization values in FIG. 6 are similar to the candidate quantization value corresponding to candidate index value "1", which are not repeated.

The encoder may be a Gray code encoder, for example, may be denoted as *g{w}*, where w denotes an input, i.e., an index value of any quantization reference value, and *g{*}* denotes a calculation function of the Gray code encoder. In other words, with the manner in which the encoder is adopted, any quantization value can be obtained according to a formula $g\left\{f_2\left(\overline{RSSI_{R,T_n}^m}\right)\right\}$. FIG. 6 is still used for exemplary description. Assuming that the m-th quantization reference value among the M quantization reference values is equal to $q_1$ illustrated in FIG. 6, the index value of the m-th quantization reference value can be obtained as 1 based on the preset classification formula, and a quantization value obtained by inputting the index value "1" into $g\{w\}$ is "0000" as illustrated in FIG. 6, then "0000" can be taken as the m-th quantization result among the M quantization results.

The target second device can generate the key of the target second device based on the multiple quantization results as follows. The target second device obtains the key of the target second device by combining the multiple quantization results. The key length of the target second device is the same as the length of the group key. Assuming that the number of multiple quantization results is $M$, the length of each quantization result is the first length, then the key length of the target second device is equal to a product of $M$ and the first length. For example, the first length is denoted as $b$ ($b=4$), and $M=32$, then the key length ($Keylen$) of the target second device is equal to 128.

After the target second device obtains the key, the target second device can generate the target second message.

In some possible embodiments, the target second message contains multiple quantization offsets of the target second device. The target second message can further perform the following processing. The target second message obtains the multiple quantization offsets of the target second device based on the multiple quantization reference values and the multiple processed signal-strength.

For example, any one of the multiple quantization offsets of the target second device is the m-th quantization offset, and the target second device can determine the m-th quantization offset as follows. The target second device obtains the m-th quantization offset by subtracting the m-th processed signal-strength from the m-th quantization reference value. For example, the processing can be represented by the following formula:

$$P_{T_n}^m = \overline{\overline{RSSI_{R,T_n}^m}} - \overline{RSSI_{R,T_n}^m}$$, where $P_{T_n}^m$ denotes the m-th quantization offset, $\overline{RSSI_{R,T_n}^m}$ denotes the m-th processed signal-strength among the multiple processed signal-strength, and $\overline{\overline{RSSI_{R,T_n}^m}}$ denotes the m-th quantization reference value. The target second device can obtain the multiple quantization reference values in the same processing manner as the m-th quantization reference value.

In some possible embodiments, the target second message may contain the key of the target second device and the multiple quantization offsets of the target second device. In addition, the target second message may further contain an identifier of the target second device.

In a possible example, the target second message carries a target message authentication code (MAC). Specifically, the target MAC can be obtained by the target second device by processing the key of the target second device, the multiple quantization offsets of the target second device, and the identifier of the target second device with an MAC algorithm. For example, the target MAC can be represented by: $MAC_{T_n} = f_1(K_{T_n,R}, P_{T_n}, TagID_n)$, where $MAC_{T_n}$ denotes the target second message, $K_{T_n,R}$ denotes the key of the target second device, $TagID_n$ denotes the identifier of the target second device, $P_{T_n}$ denotes a set of M quantization offsets of the target second device, and $f_1()$ denotes the MAC algorithm. The MAC algorithm can specifically be a lightweight MAC algorithm, for example, may be any one of an SPECK algorithm, an SIMON algorithm, etc.

In a possible example, the target MAC carried in the target second message may be generated based on the foregoing contents, and the target MAC carried in the target second message may also be jointly generated based on the following contents: the key index of the target second device and the key length of the target second device. For example, the target MAC can be represented by $MAC_{T_n} = f_1(K_{T_n,R}, P_{T_n}, KeyID_n, KeyLen, TagID_n)$, where $MAC_{T_n}$, $K_{T_n,R}$, $TagID_n$, $P_{T_n}$, and $f_1$ are the same as those in the foregoing example, which are not repeated, $KeyID_n$ denotes the key index of the target second device, and $KeyLen$ denotes the key length of the target second device. Since different second devices among the $N$ second devices have the same key length, subscripts are no longer used for distinguishing different second devices.

The foregoing processing is described by taking the target second device as an example. As described in the foregoing embodiment, the target second device is any one of the multiple second devices, and therefore, each of the multiple second devices performs the same processing as the target second device, which will not be repeated one by one. Correspondingly, the first device can receive the multiple second messages sent by the multiple second devices, which are not repeated herein.

The first device determines the verification key for the target second device as follows.

As described in the foregoing embodiment, the target second message among the multiple second messages further contains the multiple quantization offsets of the target second device, and the target second device is one of the multiple second devices. Correspondingly, taking the target second message as an example, the first device determines the verification key for each of the multiple second devices based on the multiple second messages as follows. The first device obtains a target path loss value based on received strength of the target second message, where the target path loss value is a value of path loss between the first device and the target second device. The first device obtains multiple received strength estimation values of the target second device based on the target path loss value and transmission strength of the multiple first messages, where the multiple received strength estimation values include an estimation value of received strength of each of the multiple first messages received by the target second device. The first device obtains the verification key for the target second device based on the multiple received strength estimation values of the target second device and the multiple quantization offsets of the target second device.

The first device can obtain the target path loss value based on the received strength of the target second message as follows. The first device obtains the target path loss value through calculation based on a transmission power of the last first message sent before the target second message is received, an antenna gain of the first device, an antenna gain of the target second device, a backscattering loss of the target second device, and the received strength of the target second message. The last message sent before the target second message is received may be the M-th first message or any message later than the M-th first message. For example, the calculation of the target path loss value can be represented by the following formula $PL_n = (RSSI_{CW,n\text{-}last} + G_R + G_{T_n} - Loss_{T_n} - RSSI_{T_n,R})/2$, where $PL_n$ denotes the target path loss value, $RSSI_{CW,n\text{-}last}$ denotes the transmission power of the last message sent before the target second message is received, $G_R$ denotes the antenna gain of the first device, $G_{T_n}$ denotes the antenna gain of the target second device, $Loss_{T_n}$ denotes the backscattering loss of the target second device, and $RSSI_{T_n,R}$ denotes the received strength of the target second message.

The first device obtains the multiple received strength estimation values of the target second device based on the target path loss value and the transmission strength of the multiple first messages as follows. The first device obtains a received strength estimation value of the j-th first message received by the target second device by subtracting the target path loss value from a sum of the antenna gain of the first device and transmission strength of the j-th first message among the multiple first messages. The first device takes the received strength estimation value of the j-th first message received by the target second device as the j-th received strength estimation value of the target second device, where $j$ is a positive integer, and the j-th received strength estimation value is one of the multiple received strength estimation values. For example, the foregoing processing can be denoted as: $\widetilde{RSSI_{R,T_n}^{j}} = RSSI_{CW}^{j} + G_R - PL_n$, where $RSSI_{CW}^{j}$ denotes the transmission strength of the j-th message, $\widetilde{RSSI_{R,T_n}^{j}}$ denotes the received strength estimation value of the j-th message received by the target second device, and descriptions of $G_R$ and $PL_n$ are the same as those in the foregoing example, which will not be repeated.

The first device obtains the verification key for the target second device based on the multiple received strength estimation values of the target second device and the multiple quantization offsets of the target second device as follows. The first device obtains an estimation value of target average strength based on the multiple received strength estimation values of the target second device. The first device generates multiple processed strength values based on the estimation value of the target average strength and the multiple received strength estimation values of the target second device. The first device obtains multiple quantization reference estimation values based on the multiple processed strength values and the multiple quantization offsets of the target second device. The first device obtains the verification key for the target second device by quantizing the multiple quantization reference estimation values.

The first device generates the multiple processed strength values based on the estimation value of the target average strength and the multiple received strength estimation values of the target second device as follows. The first device obtains M processed strength values by subtracting the estimation value of the target average strength from each of the multiple received strength estimation values of the target second device. For example, both the number of processed multiple strength values and the number of multiple received strength estimation values of the target second device are $M$, and the multiple received strength estimation values of the target second device are denoted as:

$$\left\{\widetilde{RSSI_{R,T_n}^{m}}\right\} = \left\{\widetilde{RSSI_{R,T_n}^{1}}, \widetilde{RSSI_{R,T_n}^{2}}, ..., \widetilde{RSSI_{R,T_n}^{M}}\right\}$$ , where R denotes the first device, $T_n$ denotes the target second device, $\left\{\widetilde{RSSI_{R,T_n}^{m}}\right\}$ denotes a set of M received strength estimation values of the target second device, and $\widetilde{RSSI_{R,T_n}^{1}}$ to $\widetilde{RSSI_{R,T_n}^{M}}$ denote the M received strength estimation values of the target second device. Further, assuming that the estimation value of the target average strength is denoted as $\widetilde{RSSI_{R,T_n}^{ave}}$, then the first device can obtain the M processed strength values by subtracting the estimation value of the target average strength from each of the M received strength estimation values of the target second device according to

$$\left\{\widetilde{RSSI_{T_n,R}^{m}}\right\} = \left\{\widetilde{RSSI_{R,T_n}^{1}} - RSSI_{R,T_n}^{ave}, \widetilde{RSSI_{R,T_n}^{2}} - RSSI_{R,T_n}^{ave}, ..., \widetilde{RSSI_{R,T_n}^{M}} - RSSI_{R,T_n}^{ave}\right\}$$ , where $\left\{\widetilde{RSSI_{T_n,R}^{m}}\right\}$ denotes a set of the M processed strength values obtained by the first device.

The first device can obtain the multiple quantization reference estimation values based on the multiple processed strength values and the multiple quantization offsets of the target second device as follows. The first device obtains the m-th estimation value by adding the m-th processed strength value and the m-th quantization offset of the target second device. The first device determines, from multiple candidate quantization reference estimation values contained in a quantization reference estimation set corresponding to the target second device, one quantization reference estimation value with the minimum absolute value of a difference between the quantization reference estimation value and the m-th estimation value as the m-th quantization reference estimation value, where the m-th quantization reference estimation value is one of the *M* quantization reference estimation values, and *m* is a positive integer less than or equal to M.

The quantization reference estimation set corresponding to the target second device can contain a specified number of candidate quantization reference estimation values. The specified number of candidate quantization reference estimation values is listed in an ascending order, and each candidate quantization reference estimation value corresponds to one index value in the quantization reference estimation set. Any two adjacent candidate quantization reference estimation values among the specified number of candidate quantization reference estimation values have the same interval, that is, the specified number of candidate quantization reference estimation values is equally spaced. The specified number can be configured according to actual conditions, for example, may be 16, 24, or larger or smaller, which is not limited in embodiments of the present disclosure.

The quantization reference estimation set corresponding to the target second device can be determined by the first device based on the multiple received strength estimation values. Specifically, the first device can perform the following processing. The first device determines the maximum received strength estimation value and the minimum received strength estimation value among the multiple received strength estimation values. The first device divides a specified number of estimation value intervals between the maximum received strength estimation value and the minimum received strength estimation value. The first device selects a middle estimation value in each of the specified number of estimation value intervals as one of the specified number of candidate quantization reference estimation values contained in the quantization reference estimation set corresponding to the target second device. In each of the specified number of estimation value intervals, a difference between the maximum value and the minimum value is the same.

The first device obtains the m-th estimation value by adding the m-th processed strength value and the m-th quantization offset of the target second device, and determines, from the multiple candidate quantization reference estimation values contained in the quantization reference estimation set corresponding to the target second device, the one quantization reference estimation value with the minimum absolute value of the difference between the quantization reference estimation value and the m-th estimation value as the m-th quantization reference estimation value, which can be calculated based on the following formula: $\widetilde{RSSI^m_{T_n,R}} = argmin_{q' \in Q_{R,n}} \left| q' - \left( \widehat{RSSI^m_{T_n,R}} + p^m_{T_n} \right) \right|$, where *argmin* denotes a value of a variable at which the objective function attains its minimum, the variable is *q'*, the objective function is $\left| q' - \left( \widehat{RSSI^m_{T_n,R}} + p^m_{T_n} \right) \right|$, the objective function $\left| q' - \left( \widehat{RSSI^m_{T_n,R}} + p^m_{T_n} \right) \right|$ represents an absolute value of a difference between the variable q' and the m-th estimation value, $\widehat{RSSI^m_{T_n,R}}$ denotes the m-th processed strength value, $p^m_{T_n}$ denotes the m-th quantization offset value, $\left( \widehat{RSSI^m_{T_n,R}} + p^m_{T_n} \right)$ denotes the m-th estimation value obtained by adding the m-th processed strength value to the *m*-th quantization offset of the target second device, $Q_{R,n}$ denotes the quantization reference estimation set corresponding to the target second device, $q' \in Q_{R,n}$ represents that the variable *q'* is a candidate quantization reference estimation value in the set $Q_{R,n}$, and $\widetilde{RSSI^m_{T_n,R}}$ denotes the m-th quantization reference estimation value. The multiple quantization reference estimation values finally obtained can be expressed in a form of a set. A manner of determining each of the multiple quantization reference estimation values is the same as the manner of determining the m-th quantization reference estimation value, which will not be listed one by one.

The first device obtains the verification key for the target second device by quantizing the multiple quantization reference estimation values as follows. The first device determines multiple quantization estimation results based on an index value of each of the multiple quantization reference estimation values. The first device obtains the verification key for the target second device based on the multiple quantization estimation results.

Specifically, the first device can obtain the index value of each of the multiple quantization reference estimation values as follows. The first device inputs the m-th quantization reference estimation value among the multiple quantization reference estimation values into the preset classification formula, to obtain an index value of the m-th quantization reference estimation value output from the preset classification formula, where the index value of the m-th quantization reference estimation value can refer to an index value corresponding to the m-th quantization reference estimation value in the quantization reference estimation set corresponding to the target second device. A manner of determining the index value of each quantization reference estimation value is the same as the manner of determining the index value of the m-th quantization reference estimation value, which will not be listed one by one.

The first device can determine the multiple quantization estimation results based on the index value of each of the multiple quantization reference estimation values as follows. The first device determines, based on a quantization mapping relationship, a quantization value corresponding to the index value of each of the multiple quantization reference estimation values, and then takes the quantization value corresponding to the index value of each quantization reference estimation value as the multiple quantization estimation results. Alternatively, the first device inputs the index value of each of the multiple quantization reference estimation values into the encoder, to obtain the quantization value corresponding to each of the multiple quantization reference estimation values output by the encoder, respectively, and then takes the quantization value corresponding to the index value of each of the multiple quantization reference estimation values as the multiple quantization estimation results. The detailed description of the quantization mapping relationship is similar to that in the foregoing embodiment, which will not be repeated. The related description of the encoder is also similar to that in the foregoing embodiment, which will not be repeated. It may be understood that, the first device and the multiple second devices adopt the same manner. For example, the target second device is taken as an example. If the target second device determines the multiple quantization results based on the quantization mapping relationship, the first device also determines the multiple quantization estimation results based on the quantization mapping relationship. If the target second device obtains the multiple quantization results by using the encoder, the first device also obtains the multiple quantization estimation results by using the encoder.

The target second device is still taken as an example, and the first device can verify the key of the target second device as follows. The first device obtains to-be-verified information by performing, based on the verification key for the target second device, MAC calculation on the target second message, and compares the to-be-verified information with the target MAC carried in the target second message. When the to-be-verified information is the same as the target MAC, the first device determines that the verification key for the target second device is consistent with the key of the target second device. A processing for the first device to verify the key of each second device is the same as the processing for the first device to verify the key of the target second device, which will not be listed one by one.

In some possible embodiments, the first device needs to obtain the received strength of each second message when determining the verification key for each second device. In the following, the processing for the first device to obtain the received strength of each second message by is described.

Optionally, in the case where different second messages among the multiple second messages have different starting transmission times and/or different second messages among the multiple second messages occupy different frequency domain ranges, the received strength of the target second message is measured by the first device.

In the case where different second messages have different starting transmission times, the first device can receive different second messages at different times, and then the first device can directly measure each second message when receiving each second message at each time. Taking the target second message as an example, the first device can perform the following processing. The first device obtains the received strength of the target second message through a measurement at any time within a duration of the target second message. Alternatively, the first device obtains multiple measurement strength of the target second message through multiple measurements within the duration of the target second message, and then takes an average value of the multiple measurement strength of the target second message as the received strength of the target second message. Any time can be configured according to actual conditions, which is not limited in embodiments of the present disclosure. The multiple measurements performed by the first device within the duration of the target second message can be executed according to a measurement period of the first device. For example, a duration of the measurement period of the first device can be configured according to actual conditions, and as long as the duration of the measurement period is less than the duration of the target second message, it falls within the protection scope of embodiments of the present disclosure, which is not limited herein. It may be pointed out that, when different second messages have different starting transmission time, different second messages may occupy the same frequency domain range or different frequency domain ranges.

In the case where different second messages have the same starting transmission time and different second messages occupy different frequency domain ranges, the first device can directly measure each second message based on frequency division multiplexing (FDM) when the first device receives each second message in each frequency domain range. A specific measurement manner is the same as that in the above, which will not be repeated.

Optionally, in the case where different second messages among the multiple second messages have the same starting transmission time and different second messages among the multiple second messages occupy the same frequency domain range, the received strength of the target second message is determined by the first device based on self-interference cancellation (SIC).

In this case, since different second messages have the same starting transmission time and occupy the same frequency domain range, the first device will simultaneously receive multiple second messages in the same frequency domain range. The first device can specifically perform the following processing. When the first device receives the multiple second messages based on non-orthogonal multiple access (NOMA), the first device obtains the received strength of each second message by parsing the multiple second messages in a power domain based on the SIC.

For example, assuming that both the number of multiple second messages and the number of multiple second devices are *N*, then the *N* second messages received by the first device based on the NOMA are denoted as

$$Y = \sum_{n=1}^{N} S_n + \text{Noise}$$

, where $S_n$ denotes a second message (may be the target second message) sent by the n-th second device (i.e., may be the target second device) among the *N* second devices, and Noise denotes the original noise.

It is assumed that received strength of the $N$ second messages is sorted as follows: $S_1 \geq S_2 \geq ... \geq S_N$. The first device can obtain the received strength of each of the $N$ second messages by parsing the $N$ second messages in the power domain based on the SIC as follows. The first device captures, based on the capture effect, the first second-message with the strongest signal power from the $N$ second messages, takes $N$-1 second messages and the original noise as noise, decodes the first second-message with the strongest power based on the SIC, reconstructs a waveform of the first second-message, and then obtains received strength of the first second-message. The first device subtracts the reconstructed waveform of the first second-message from the $N$ second messages and decodes the remaining $N$-1 second messages based on the SIC, which are repeated until the received strength of each second message is finally obtained.

The first device captures, based on the capture effect, the first second-message with the strongest signal power from the $N$ second messages, and takes the remaining N-1 second messages and the original noise as noise, then the first second-message with the strongest power decoded based on the SIC can be obtained based on the following formula:

$$SINR_1 = \frac{S_1}{\sum_{n=2}^{N} S_n + Noise}$$ , where $S_1$ denotes the first second-message, and the remaining second second-message to the N-th second messages and the original noise are all taken as noise. Further, the first device captures, based on the capture effect, the second second-message with the strongest signal power from the remaining $N$-1 second messages, and takes the remaining N-2 second messages and the original noise as noise, then the second second-message with the strongest power decoded based on the SIC can be obtained based on the following formula $SINR_2 = \frac{S_2}{\sum_{n=3}^{N} S_n + Noise}$ ,

where $S_2$ denotes the second second-message, and the remaining third second-message to the N-th second messages and the original noise are all taken as noise. Similarly, the first device captures, based on the capture effect, the (N-1)-th second message with the strongest signal power from the remaining two second-messages, and takes the remaining N-th second message and the original noise as noise, then the (N-1)-th second message with the strongest power decoded based on the SIC can be obtained based on the following formula $SINR_{N-1} = \frac{S_{N-1}}{S_N + Noise}$ , where $S_{N-1}$ denotes the (N-1)-th second message, and the remaining the N-th second messages and the original noise are all taken as noise.

A starting transmission time of each second message can be determined by each second device based on a fourth message sent by the first device. In the following, a manner for each second device to determine a starting transmission time of a second message is further described.

Before the first device sends the multiple first messages to the multiple second devices, the method further includes the following. The first device sends the fourth message to the multiple second devices, where the fourth message contains the number of first messages used for generating the keys and a timing parameter, and the timing parameter is used for each of the multiple second devices to determine the starting transmission time of the second message. Correspondingly, the target second device is taken as an example. Before the target second device receives the multiple first messages sent by the first device, the method further includes the following. The target second device receives the fourth message sent by the first device, where the fourth message contains the number of first messages used for generating the keys and the timing parameter, and the timing parameter is used for determining a starting transmission time of the target second message.

The number of first messages used for generating the keys can be denoted as M. The fourth message can be carried in a query command, where the query command can be broadcast by the first device to the multiple second devices. In a possible example, the query command may be referred to as "key generation request query command. The timing parameter can be a positive number.

The target second device is taken as an example. The starting transmission time of the target second message is a time when a count value of a target counter of the target second device is zero, the count value of the target counter is decremented when the target second device receives one of the multiple first messages, and the maximum value of the count value of the target counter is determined based on the timing parameter.

The number of multiple first messages can be greater than or equal to the number of first messages used for generating the keys. Assuming that the number of multiple first messages is $K$ and the number of first messages used for generating the keys is M, then the first messages used for generating the keys are the first message to the M-th first message among the multiple first messages. As long as the value of $K$ is not less than M, it falls within the protection scope of embodiments of the present disclosure. For example, M may be 32, 24, 4, or larger or smaller, and K may be 48, 50, 61, or larger or smaller. The values of $K$ and M are not exhaustively listed herein.

After the target second device receives the fourth message, the method can include the following. The target second device determines the maximum value of the count value of the target counter based on the fourth message, and takes the maximum value as an initial value of the count value of the target counter. The target second device sends the target second message as follows. When the target second device receives any one of the multiple first messages, the target second device decrements the count value of the target counter by one, and then determines whether the number of messages currently received reaches M. Based on a determination that the number of messages currently received does not reach M, the target second device continues to decrement the count value of the target counter by one when the target second device receives any one of the multiple first messages and to determine whether the number of messages currently received reaches M. Based on a determination that the number of messages currently received reaches M, the target second device generates the key of the target second device based on the received strength of each of the M first messages, and then determines whether the count value of the target counter is zero. Based on a determination that the count value of the target counter is not zero, the target second device continues to decrement the count value of the target counter by one when the target second device receives any one of the multiple first messages. Based on a determination that the count value of the target counter is zero, the target second device takes a current time as the starting transmission time of the target second message, and sends the target second message containing the key of the target second device to the first device. The processing for the target second device to generate the key of the target second device is illustrated in the foregoing embodiment, which will not be repeated herein.

Optionally, the maximum value of the count value of the target counter is determined by the target second device based on the timing parameter and the number of first messages used for generating the keys.

The target second device can determine the maximum value of the count value of the target counter as follows. The target second device takes the number M of first messages used for generating the keys as a lower bound. The target second device determines an upper bound based on the timing parameter. The target second device randomly selects the maximum value of the count value of the target counter between the lower bound and the upper bound.

The target second device can determine the upper bound based on the timing parameter as follows. The target second device calculates the upper bound based on the timing parameter. The target second device calculating the upper bound based on the timing parameter can be represented by the following formula: $2^C - 1$, where C denotes the timing parameter, and the timing parameter can be a positive number. The target second device can randomly select the maximum value of the count value of the target counter between the lower bound and the upper bound as follows. The target second device randomly selects any value from a range of $[M, 2^C - 1]$ as the maximum value of the count value of the target counter.

It may be understood that, the above only illustrates that the target second device determines the maximum value of the count value of the target counter of the target second device and the target second device determines the starting transmission time of the target second message, and the specific processing manner of each of the multiple second devices is the same as that of the target second device, which will not be listed one by one.

Optionally, the timing parameter includes a specified count value, and the maximum value of the count value of the target counter is the specified count value.

Different from the above, the maximum value of the count value of the target counter determined by the target second device is the specified count value. Since the processing at each of the multiple second devices is the same as that at the target second device, the maximum value of each counter determined by each second device is the specified count value, and thus the starting transmission time of each second message sent by each second device is the same.

The above describes the manner of determining the starting transmission time of each second message, and the following will describe a manner of determining a frequency domain range occupied by each second message. The target second device is taken as an example. The target second device sends the target second message to the first device as follows. The target second device sends the target second message to the first device in a first frequency domain range. The first frequency domain range is pre-configured, for example, may be pre-configured by the first device for the target second device, may be pre-configured by the administrator on the target second device, or may be configured in other manners, which are not exhaustively listed herein. The first frequency domain range is different from a frequency domain range occupied by each of other second devices among the multiple second devices to send the second message. Alternatively, the first frequency domain range is the same as the frequency domain range occupied by each of other second devices among the multiple second devices to send the second message. It may be understood that, the processing at each of the multiple second devices is the same as that at the target second device, and thus each second device can pre-determine a respective frequency domain range occupied by each second device to send the second message, which will not be repeated one by one.

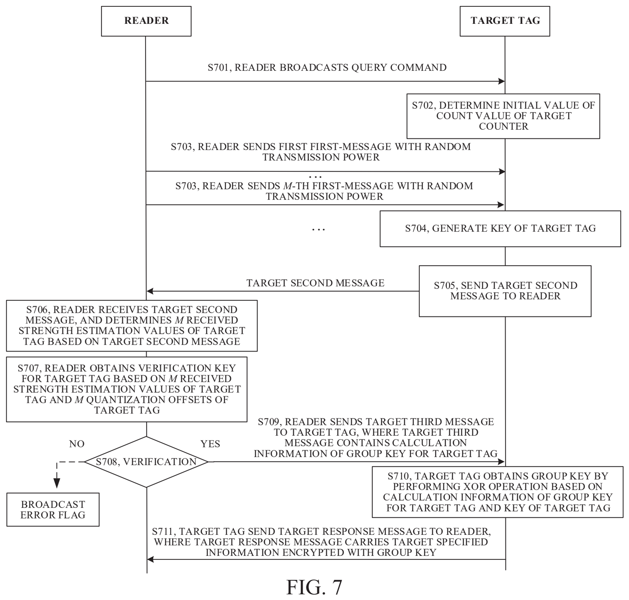

With reference to FIG. 7, the key generation method is exemplified with an example where a first device is a reader, multiple second devices are N second devices, each second device is a tag, and a target second device is a target tag.

At S701, the reader broadcasts a query command, where the query command carries a fourth message, the fourth message contains the number M of first messages used for generating the keys and a timing parameter C, and the timing parameter C is used for determining a starting transmission time of a second message.

Specifically, the reader can broadcast the query command (or referred to as "key generation request query command") to N tags contained in a tag group. The tag group can specifically refer to a device group composed of the N tags.

It may be understood that, before the operations at S701 are performed, assuming that the N tags are in a ready state, then the reader first initiates a select command to select all of the N tags in the tag group, enters an inventory phase (i.e., the reader starts an inventory process), and then performs the operations at S701. The select command can carry related information of each of the $N$ tags, and the related information of each tag can include a tag memory value of the tag.

At S702, after the target tag receives the query command, the target tag determines an initial value of a count value of a target counter.

Specifically, after the target tag receives the query command, the target second device takes M as a lower bound. The target second device determines, based on the timing parameter C, an upper bound as $2^C$ - 1. The target second device randomly selects the maximum value of the count value of the target counter from a range of $[M, 2^C - 1]$, and takes the maximum value of the count value of the target counter as the initial value of the count value of the target counter. Then, the target tag enters an arbitrate state.

Each of the $N$ tags performs the same processing as the target tag, which will not be repeated one by one herein. In FIG. 7, for the sake of brevity, only the target tag is exemplified, and the $N$ tags are not illustrated one by one.

At S703, the reader sends the M first messages each with a random transmission power.

Specifically, the reader sends no less than $M$ *QueryRep* messages each with the random transmission power during a coherence time. For example, the reader can send K *QueryRep* messages each with the random transmission power during the coherence time, where $M$ of the $K$ *QueryRep* messages are used for the $N$ tags to generate the keys, and K is greater than or equal to $M$. The specific description of the reader sending the $M$ first messages each with the random transmission power is the same as that in the foregoing embodiment, which will not be repeated herein. In FIG. 7, in order to illustrate that the reader sends the M first messages each with the random transmission power, the operations at S703 are illustrated as from the reader sending the first first-message with the random transmission power to the reader sending the M-th first message with the random transmission power.

At S704, the target tag generates a key of the target tag based on received strength of each of the M first messages.

The specific processing for the target tag to generate the key of the target tag is described in detail in the foregoing embodiment, which will not be repeated. In addition, each of the $N$ tags generates a respective key in the same manner as the target tag, which will not be repeated. In FIG. 7, for the sake of simplicity, only the target tag is exemplified, and the $N$ tags are not illustrated one by one.

At S705, the target tag sends a target second message to the reader at the starting transmission time of the target second message.

The starting transmission time of the target second message is a time when the count value of the target counter is zero, and the count value of the target counter is minus 1 when the target tag receives any first message. The specific processing for the target tag to determine the starting transmission time of the target second message is detailed in the foregoing embodiment, which will not be repeated herein.

The target second message may specifically be a target MAC. The content that the target MAC may carry and the manner of generating the target MAC are the same as those in the foregoing embodiment, which will not be repeated.

Each of the $N$ tags sends a respective second message in the same manner as the target tag, which will not be repeated. In FIG. 7, for the sake of simplicity, only the target tag is exemplified, and the $N$ tags sending respective second messages are not illustrated one by one.

At S706, the reader receives the target second message, and determines M received strength estimation values of the target tag based on the target second message.

Specifically, the reader receives the target second message (may be a target MAC message or may be referred to as "target MAC") backscattered by the target tag, determines a target path loss between the reader and the target tag based on the received strength of the target second message, and obtains the M received strength estimation values of the target tag based on the target path loss. The specific processing of determining the target path loss between the reader and the target tag based on the received strength of the target second message and the specific processing of obtaining the M received strength estimation values of the target tag based on the target path loss are the same as those in the foregoing embodiment, which will not be repeated.

At S707, the reader obtains a verification key for the target tag based on the $M$ received strength estimation values of the target tag and M quantization offsets of the target tag.

The specific processing of the operations at S707 is described in detail in the foregoing embodiment, which will not be repeated herein.

The operations at S706 to S707 only illustrate that the reader obtains the key of the target tag by processing the target second message of the target tag, and the reader processes each of the $N$ tags in the same manner as the target tag, which will not be described one by one.

At S708, the reader determines, based on a verification key for each of the $N$ tags, whether a key of each tag passes the verification. If the verification is successful, operations at S709 are to be performed, and if the verification fails, an error flag is broadcast, and the processing ends.

Broadcasting the error flag may be broadcasting the error flag to each of the $N$ tags. Further, after the error flag is broadcast, no further processing may be performed, or the operations at S701 are to be performed again. Before the operations at S701 are to be performed again, the reader may remove a tag whose verification key is inconsistent with its key from the *N* tags in the tag group, and form a new tag group composed of the remaining tags, or the reader may not remove the *N* tags.

At S709, the reader sends a target third message to the target tag, where the target third message contains calculation information of a group key for the target tag.

Specifically, the reader obtains the calculation information of the group key for the target tag by performing XOR operation based on a group key and the key of the target tag. After the operations at S708 and before the operations at S709, the reader further generates the group key based on a key of each of the *N* second devices. The specific processing for the reader to generate the group key is the same as that in the foregoing embodiment, which will not be repeated herein.

The operations at S709 only describe the processing of the target third message of the target tag by the reader, and the processing at each of the *N* tags by the reader is the same as that at the target tag, which will not be described one by one. In FIG. 7, for the sake of simplicity, only the reader sending the target third message to the target tag is exemplified, and the reader sending respective third messages to the *N* tags will not be illustrated one by one.

At S710, the target tag obtains the group key by performing XOR operation based on the calculation information of the group key for the target tag and the key of the target tag.

At S711, the target tag sends a target response message to the reader, where the target response message carries target specified information encrypted with the group key.

A length of the target response message may be 135 bits, or longer or shorter, which is not exhaustively listed herein. The target specified information indication can contain an EPC.

The operations at S710 to S711 only illustrate the processing at the target tag, and the processing at each of the *N* tags is the same as that at the target tag, which will not be described one by one. In FIG. 7, for the sake of simplicity, only the target tag is exemplified, and the processing at the *N* tags is not illustrated one by one.

After the target tag sends the target response message, the target tag enters an access stage and then further enters an acknowledge stage. Correspondingly, after the reader receives respective response messages sent by the *N* tags, the reader enters the access stage and then further enters the acknowledge stage. The specific processing of the access stage and the acknowledge stage is not limited in embodiments of the present disclosure.

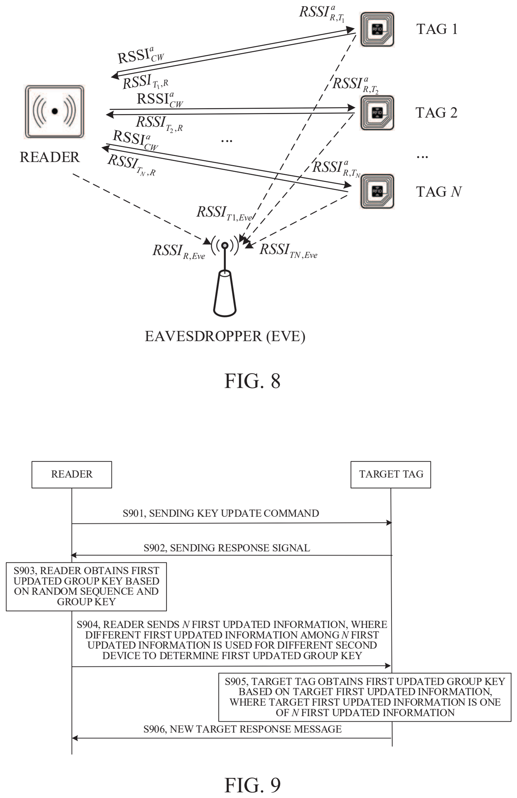

Further, with reference to a schematic diagram of a scenario illustrated in FIG. 8, the reader sends any message (the transmission power of the message is denoted as $RSSI_{CW}^{a}$ in FIG. 8). As illustrated in FIG. 8, among the *N* tags, received strength of the message received by Tag1 is denoted as $RSSI_{R,T_1}^{a}$, received strength of the message received by Tag2 is denoted as $RSSI_{R,T_2}^{a}$, and similarly, received strength of the message received by TagN is denoted as $RSSI_{R,T_N}^{a}$. After the *N* tags generate respective keys, the *N* tags send respective second messages to the reader. Received strength of a second message sent by Tag1 among the *N* tags received by the reader is denoted as $RSSI_{T_1,R}$ in FIG. 8, received strength of a second message sent by Tag2 among the *N* tags received by the reader is denoted as $RSSI_{T_2,R}$ in FIG. 8, and similarly, received strength of the second message sent by TagN among the *N* tags received by the reader is denoted as $RSSI_{T_N,R}$ in FIG. 8. Although an eavesdropper (Eve) can monitor strength (e.g., $RSSI_{R,Eve}$ as illustrated in FIG. 8) of any message and strength (e.g., $RSSI_{T1,Eve}$ to $RSSI_{TN,Eve}$ as illustrated in FIG. 8) of the second messages sent by the *N* tags, the Eve does not have knowledge of the channel reciprocity between each tag and the reader, such that the Eve is unable to obtain the key of each tag, and further, the Eve is unable to obtain a final group key. In this way, the security of the keys between the reader and the *N* tags and the security of the group key can be ensured.

In some possible embodiments, after the first device has sent the *N* third messages, the first device can further update the group key.

Optionally, the first device can update a group key when an update time of the group key is reached.

After the first device sends the multiple third messages to the multiple second devices, the method further includes the following. The first device generates a random sequence at the update time of the group key. The first device obtains a first updated group key based on the random sequence and the group key. The first device sends multiple first updated information to the multiple second devices, where different first updated information among the multiple first updated information is used for a different second device to determine the first updated group key.

It may be understood that, when the first device generates the group key for the first time, the first device saves the group key generated for the first time as a current group key. After the first device generates the first updated group key, the first device can delete the group key saved last time and save the first updated group key as the current group key. That is to say, the first device can obtain the first updated group key based on the random sequence and the group key as follows. The first device obtains the first updated group key based on the random sequence and the current group key. Correspondingly, after the first device sends the multiple first updated information, the first device can further delete the original group key and save the first updated group key as the current group key.

Specifically, the first device can determine the update time of the group key as follows. The first device calculates a time difference between a current time $T_0$ and a time $T_1$ when the group key was generated last time, and then determines whether the time difference is greater than a preset update duration T_update (i.e., the first device determines whether $T_0 - T_1 > T_{update}$). If the time difference is not greater than the preset update duration, the first device continues to calculate the time difference between the current time and the time when the group key was generated last time, and then determines whether the time difference is greater than the preset update duration. If the time difference is greater than the preset update duration, the first device determines the current time as the update time of the group key. The preset update duration can be set according to actual conditions, for example, may be 30 minutes, 1 hour, 12 hours, or longer or shorter, which is not limited herein.

It may be understood that, the processing of updating the group key by the first device may be performed periodically with the preset update duration as a period, and thus the first device uses different previous group key generation times when determining the update time of the group key for different times. The last generated group key may specifically refer to a time of generating the current group key saved by the first device, and the description of the current group key is the same as that in the above, which will not be repeated.

The random sequence may be generated by using a random sequence generator or may be generated in other manners, which is not limited in embodiments of the present disclosure. It may be noted that, the length of the random sequence is the same as the length of the group key.

The first device can obtain the first updated group key based on the random sequence and the group key as follows. The first device obtains the first updated group key by performing XOR operation on the random sequence and the group key, for example, which can be represented by the following formula: $K'_G = K_G \oplus R_{update}$, where $K_G$ denotes the group key, $R_{update}$ denotes the random sequence, and $K'_G$ denotes the first updated group key.

Target first updated information among the multiple first updated information contains target first updated calculation information for the target second device, where the target first updated calculation information for the target second device is obtained by performing XOR operation based on the key of the target second device and the first updated group key. In other words, the first device can generate the target first updated calculation information for the target second device as follows. The first device obtains the target first updated calculation information by performing XOR operation on the key of the target second device and the first updated group key.

Correspondingly, the target second device is taken as an example. After the target second device receives the target third message sent by the first device, the method further includes the following. In the case where the target second device receives the target first updated information sent by the first device, the target second device obtains the first updated group key by performing XOR operation based on the target first updated calculation information and the key of the target second device, where the target first updated information is generated by the first device at the update time of the group key, and the target first updated information contains target first updated calculation information for the target second device.

It may also be noted that, in a processing scenario where the first device updates the group key when the update time of the group key is reached, after the first device determines that the update time of the group key is reached, the method can further include the following. The first device sends a key update command to the multiple second devices. In the case where the first device receives a respective response signal from each of the multiple second devices, the first device generates the random sequence at the update time of the group key. The first device obtains the first updated group key based on the random sequence and the group key. The first device sends the multiple first updated information. Correspondingly, taking the target second device as an example, the target second device can further perform the following processing. In the case where the target second device receives the key update command, the target second device sends a response signal to the first device.

The key update command can further contain multiple new first messages occupying different time domains. After the count value of the target counter is reset to zero last time and after the target response message is sent last time, the target second device can reset the count value of the target counter to the initial value. Correspondingly, in the case where the target second device receives the key update command, the target second device can send the response signal to the first device as follows. When the target second device receives any new first message contained in the key update command again, the count value of the target counter is minus 1, and the target second device sends the response signal until the count value of the target counter is zero.

Further, in the case where the target second device receives the target first updated information, after the target second device obtains the first updated group key based on the target first updated information, the method can further include the following. The target second device obtains a new target response message by encrypting the target specified information with the first updated group key, and sends the new target response message to the first device. Correspondingly, in the case where the first device receives a new response message from each second device, the first device can also enter subsequent processing stages, where the subsequent processing stages can include the access stage and the acknowledge stage, which are not repeated herein. In addition, when or after the target second device sends the new target response message, the method can further include the following. The target second device deletes the original group key and saves the first updated group key as the current group key.

With reference to FIG. 9, a processing scenario where a first device updates a group key when an update time of the group key is reached is described with an example where the first device is a reader, multiple second devices are *N* second devices, each second device is a tag, and a target second device is a target tag.

At S901, the reader sends a key update command at the update time of the group key. The key update command can be broadcast to *N* tags.

At S902, the target tag sends a response signal to the reader. Specifically, the target tag can send the response signal when a count value of a target counter is zero. The specific processing at the target tag is described in detail in the foregoing embodiment, which will not be repeated herein.

At S903, the reader obtains a first updated group key based on a random sequence and the group key.

At S904, the reader sends *N* first updated information, where different first updated information among the *N* first updated information is used for a different second device to determine the first updated group key.

At S905, the target tag obtains the first updated group key based on target first updated information, where the target first updated information is one of the *N* first updated information.

At S906, the target tag obtains a new target response message by encrypting target specified information with the first updated group key, and sends the new target response message to the first device.

It may be noted that, the operations at S902, S905, and S906 are only described by taking the target tag as an example. In actual processing, each of the *N* tags will perform the same operations at S902, S905, and S906 as the target tag, which will not be listed one by one. In addition, for the sake of simplicity, FIG. 9 only illustrates an interaction between the reader and the target tag, and the processing between the reader and the *N* tags will not be illustrated one by one.

Optionally, the first device can update the group key when a third device is added to a device group composed of the multiple second devices.

After the first device sends multiple third messages to the multiple second devices, the method can further include the following. In the case where the first device receives first indication information, the first device determines to add the third device, where the first indication information indicates to add the third device to the device group composed of the multiple second devices.

Specifically, the first indication information may be sent by a second network device to the first device, and the second network device may be an AF. For example, when the first device is an AN device, the first device may receive the first indication information sent by the second network device through one or more CN devices. Alternatively, when the first device is a first terminal, the first device may receive the first indication information sent by the second network device through one or more CN devices, where the first indication information may be carried by a non-access stratum (NAS) message. Alternatively, when the first device is a first terminal, the first device may receive the first indication information sent by the second network device through a second AN device, where the first indication information may be carried by an access stratum (AS) message.

In a possible example, after the first device sends the multiple third messages to the multiple second devices, the method can further include the following. The first device determines a verification key for the third device based on a fifth message. Based on a determination that the verification key for the third device is consistent with a key of the third device, the first device generates a second updated group key based on verification keys for the multiple second devices and the verification key for the third device. The first device sends multiple second updated information, where different second updated information among the multiple second updated information is used for the third device and different devices among the multiple second devices to determine the second updated group key.

In this example, before the first device receives the fifth message sent by the third device, the first device can resend multiple new first messages, and the multiple new first messages resent are the same as the multiple first messages defined in the foregoing embodiment, which are not repeated. In addition, before the first device resends the multiple new first messages, the first device can further send a sixth message to the third device, where the sixth message can carry the number M of first messages used for generating keys and a timing parameter, and the timing parameter is used for the third device to determine a starting transmission time of the fifth message. The detailed description of the timing parameter is the same as that in the foregoing embodiment, and the manner of determining the starting transmission time of the fifth message by the third device is the same as the manner of determining the starting transmission time of the target second message by the target second device, which will not be repeated. The specific processing of generating the key by the third device is the same as the processing of generating the key by the target second device based on the received strength of the multiple first messages, except that the third device generates the key based on the received strength of the multiple first messages resent by the first device, which is not repeated. In addition, when the third device sends the fifth message, the contents that the fifth message may contain and the generation manner of the fifth message are the same as those of the target second message, which are not repeated.

The specific processing manner for the first device to determine the verification key for the third device based on the fifth message is similar to the manner of obtaining the verification key for the target second device, which is not repeated.

Different from the foregoing embodiment, when the third device is added, the first device only needs to verify whether the verification key for the third device is consistent with the key of the third device. The specific processing manner for the first device to generate the second updated group key is similar to the manner of generating the group key, which will not be repeated.

The third device is taken as an example. Second updated information corresponding to the third device contains second updated calculation information corresponding to the third device, where the second updated calculation information corresponding to the third device is obtained by performing XOR operation based on the key of the third device and the second updated group key. Correspondingly, the third device can perform the following processing. In the case where the third device receives the second updated information, the third device obtains the second updated group key based on the second updated information, where the second updated information is sent when the third device is added to the device group composed of the multiple second devices, and the second updated information is used for the third device to determine the second updated group key. Specifically, the third device obtains the second updated group key by performing XOR operation on the target second updated calculation information and the key of the third device.

The target second device is taken as an example. Target second updated information corresponding to the target second device contains target second updated calculation information corresponding to the target second device, where the target second updated calculation information is obtained by performing XOR operation based on a key of the target second device and the second updated group key. Correspondingly, the target second device can perform the following processing. In the case where the target second device receives target second updated information sent by the first device, the target second device obtains the second updated group key based on the target second updated information, where the target second updated information is sent when the third device is added to the device group composed of the multiple second devices, and the target second updated information is used by the target second device to determine the second updated group key.

It may be noted that, after the first device generates the second updated group key, the first device will further delete an original group key saved therein and save the second updated group key as a current group key. Similarly, after each second device obtains the second updated group key, each second device will delete the original group key saved therein and save the second updated group key as the current group key.

Specifically, the target second device is still taken as an example. After the target second device obtains the second updated group key, the method can further include the following. The target second device obtains a new target response message by encrypting the target specified information with the second updated group key, and sends the new target response message to the first device. Correspondingly, in the case where the first device receives a new response message from each of the second devices and the third device, the first device can also enter the subsequent processing stages, where the subsequent processing stages can include the access stage and the acknowledge stage, which are not repeated herein. In addition, when or after the target second device sends the new target response message, the method can further include the following. The target second device deletes the original group key saved therein and saves the second updated group key as the current group key.

Further, the processing for the first device to update the group key when the first device adds the third device to the device group composed of the multiple second devices can be combined with the processing for the first device to update the group key when the update time of the group key is reached. For example, after the first device updates the group key when the third device is added to the device group composed of the multiple second devices, the first device updates a time when the group key was generated last time to a time when the second updated group key is generated, calculates a time difference between a current time and the time when the group key was generated last time, and then determines whether the time difference is greater than a preset update duration, until the update time of the group key is reached.

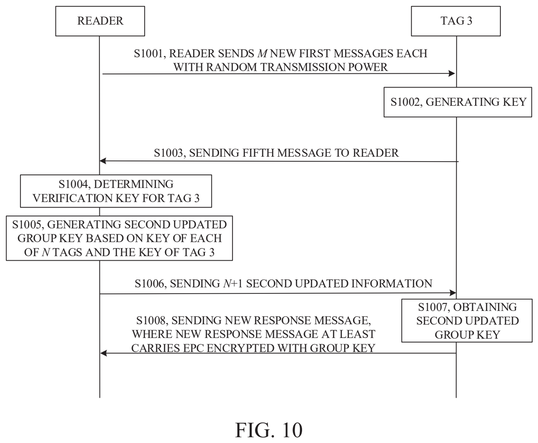

With reference to FIG. 10, a processing scenario where a first device updates a group key when an update time of the group key is reached is described with an example where the first device is a reader, multiple second devices are $N$ second devices, each second device is a tag, and a target second device is a target tag, and a third device is Tag 3.

At S1001, the reader sends $M$ new first messages each with random transmission powers.

It may be understood that, before the operations at S1001 are performed, assuming that Tag 3 is in the ready state, then the reader first transmits a select command to select Tag 3, enters the inventory stage (i.e., the reader starts the inventory process), and then performs the operations at S1001. The select command can carry related information of Tag 3, and the related information of Tag 3 can include a tag memory value of Tag 3. In addition, before the operations at S1001 are performed, the reader can further send seventh information to Tag 3, where the seventh information can contain the value of $M$ and a timing parameter, and the timing parameter is used for Tag 3 to determine a starting transmission time of a fifth message.

At S1002, Tag 3 generates a key based on received strength of the $M$ new first messages.

At S1003, Tag 3 sends the fifth message to the reader at the starting transmission time of the fifth message.

At S1004, the reader receives the fifth message, and determines a verification key for Tag 3 based on the fifth message.

At S1005, in the case where the verification key for Tag 3 is consistent with the key of Tag 3, the reader generates a second updated group key based on a key of each of the N tags and the key of Tag 3.

At S1006, the reader sends N+1 second updated information, where different second updated information in the N+1 second updated information is used for Tag 3 and different devices among the N tags to determine the second updated group key.

At S1007, Tag 3 obtains the second updated group key by performing XOR operation based on second updated calculation information contained in the second updated information corresponding to Tag 3 and based on the key of Tag 3.

At S1008, Tag 3 sends a new response message to the reader, where the new response message at least carries an EPC encrypted with the group key.

It may be noted that, the operations at S1007 and S1008 can be performed by each of the N tags and Tag 3. Since the processing at each of the N tags is the same as that at Tag 3, the related description are not repeated. For the sake of simplicity, FIG. 10 only illustrates an interaction between the reader and Tag 3, and the processing between the reader and the N tags will not be listed one by one.

Optionally, the first device can further update the group key when any second device is deleted.

The method can further include the following. In the case where the first device receives second indication information, the first device determines to delete the h-th second device among the multiple second devices, where the second indication information indicates to delete the h-th second device from a device group composed of the multiple second devices. The first device can receive the second indication information as follows. The first device receives the second indication information sent by a second network device, and the second network device may be an AF. A manner for the first device to receive the second indication information sent by the second network device is similar to the manner for the first device to receive the first indication information sent by the second network device, which is not described in detail.

After the first device sends multiple third messages to the multiple second devices, the method further includes the following. In the case where the first device determines to delete the h-th second device among the multiple second devices, the first device generates a third updated group key based on a verification key for each of the multiple second devices except the h-th second device, where h is a positive integer. The first device sends multiple third updated information to the multiple second devices except the h-th second device, where the multiple third updated information is used for different second devices among the multiple second devices except the h-th second device to determine the third updated group key. A specific processing manner for the first device to generate the third updated group key is similar to the processing manner for the first device to generate the group key based on a key of each of the multiple second devices, which will not be repeated.

Target third updated information among the multiple third updated information contains target third updated calculation information for the target second device, where the target third updated calculation information for the target second device is obtained by performing XOR operation based on a key of the target second device and the third updated group key.

Correspondingly, each of the multiple second devices other than the h-th second device can further receive third updated information. The target second device is any one of the multiple second devices other than the h-th second device as an example, and the target second device can further perform the following processing. In the case where the target second device receives the target third updated information sent by the first device, the target second device obtains the third updated group key based on the target third updated information, where the target third updated information is sent when the h-th second device is deleted from the device group composed of the multiple second devices, the target third updated information is used by the target second device to determine the third updated group key, and h is a positive integer. The third updated group key is obtained based on the target third updated information as follows. The target second device obtains the third updated group key by performing XOR operation based on the target third updated calculation information among the target third updated information and the key of the target second device.

It may be noted that, after the first device generates the third updated group key, the first device will further delete an original group key saved therein and save the third updated group key as a current group key. Similarly, after each second device except the h-th second device obtains the third updated group key, each second device except the h-th second device will delete the original group key saved therein and save the third updated group key as the current group key.

Specifically, any second device except the h-th second device is taken the target second device as an example. After the target second device obtains the third updated group key, the method can further include the following. The target second device obtains a new target response message by encrypting target specified information with the third updated group key, and sends the new target response message to the first device. Correspondingly, in the case where the first device receives a new response message from each second device, the first device can also enter the subsequent processing stages, where the subsequent processing stages can include the access stage and the acknowledge stage, which are not repeated herein. In addition, when or after the target second device sends the new target response message, the method can further include the following. The target second device deletes the original group key saved therein and saves the third updated group key as the current group key.

Further, the processing for the first device to update the group key when the first device deletes the *h*-th second device from the device group composed of the multiple second devices can be combined with the processing for the first device to update the group key when the update time of the group key is reached. For example, after the first device updates the group key when the *h*-th second device is deleted from the device group composed of the multiple second devices, the first device updates a time when the group key was generated last time to a time when the third updated group key is generated, calculates a time difference between a current time and the time when the group key was generated last time, and then determines whether the time difference is greater than a preset update duration, until the update time of the group key is reached.

The effect of the key generation method provided in embodiments of the present disclosure is simulated and analyzed.

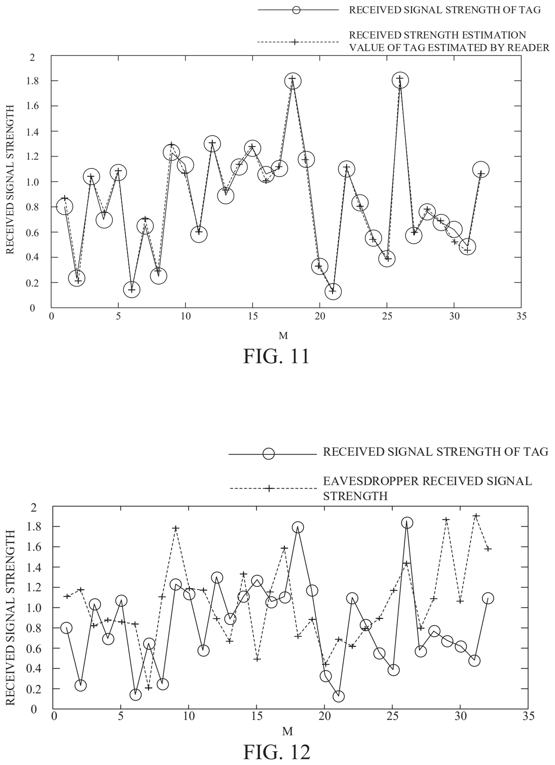

Assuming that *M* is 32, the first length is *4*, the key length is 4 × 32=128 bits, the first device is a reader, the second device is a tag, and *N* tags are referred to as a tag group. The reader is located 1 meter away from the tag and an Eve. The small-scale fading between the reader and the Eve follows a Rayleigh distribution, while the small-scale fading between the reader and the tag follows a Rice distribution, with a Rice factor of 5 dB. The antenna gain of the reader is 3 dB, the antenna gain of the tag is 2 dB, and the backscattering loss of the tag is 5 dB. The random transmission power for the reader ranges from 23 dBm to 30 dBm. A default signal-to-noise ratio (SNR) is SNR = 30 dB. As illustrated in FIG. 11, when the SNR is 30 dB and the reader sends *M* first messages, received strength (i.e., received signal strength of the tag indicated by a solid line passing through circles in FIG. 11) of each message measured by the tag is basically the same as each received strength estimation value (indicated by a dotted line passing through crosses in FIG. 11) of the tag estimated by the reader. As illustrated in FIG. 12, when the SNR is 30 dB and the reader sends *M* first messages, the received strength (i.e., tag received signal strength of the tag indicated by a solid line passing through circles in FIG. 12) of each message measured by the tag is significantly different from the received signal strength (indicated by a dotted line passing through crosses in FIG. 12) of each message obtained by the Eve. In a simulation experiment, as the SNR is adjusted and tested, it can be found that with the increase of SNR, both each received strength estimation value of the tag estimated by the reader and the received strength of each message measured by the tag also increase. When the SNR is 50 dB, each received strength estimation value of the tag estimated by the reader is almost completely consistent with the received strength of each message measured by the tag, that is, the reader and the tag can extract consistent keys and consistent verification keys. With the increase of SNR, since the Eve and the tag pass through different channels, each received strength estimation value obtained by the Eve is almost completely different from the received strength of each message measured by the tag, and thus the Eve is unable to obtain a pairwise key consistent with the tag.

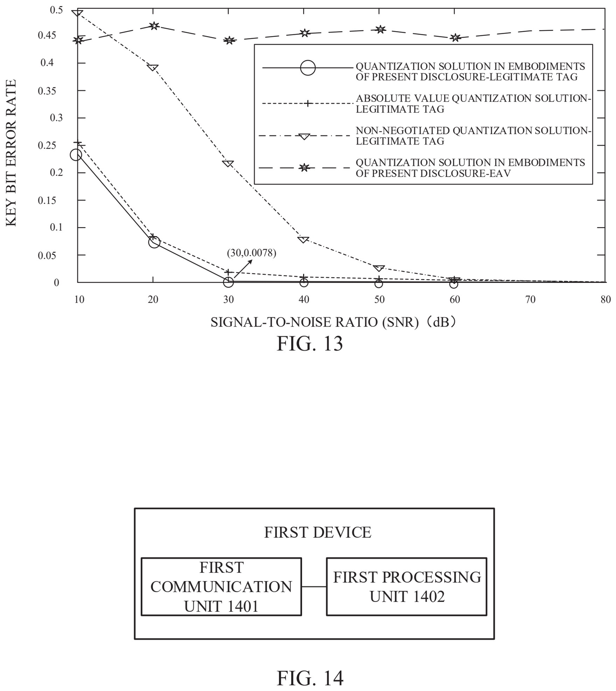

The key BER is defined as a ratio of the number of differing bits in a shared key between both sides to a total number of bits extracted during a quantization phase. FIG. 13 illustrates a relationship between the key BER and the SNR under different solutions. As can be seen, the quantization solution in embodiments of the present disclosure is significantly better than other quantization solutions. Specifically, when the SNR is greater than 30 dB, the quantization solution in embodiments of the present disclosure reduces the key BER to 0.0078, that is, a key (and verification key) consistency rate between the reader and the tag can reach over 99.7%, while the absolute value quantization solution can achieve a key (and verification key) consistency rate of 99.7% only when the SNR is 40 dB. Likely, for the non-negotiated quantization solution, only when the SNR is nearly 60 dB, the key BER can be as low as 0.0078, that is, the key (and verification key) consistency rate between the reader and the tag can reach over 99.7%. In addition, as can be seen from FIG. 13, with the quantization solution in embodiments of the present disclosure, the key BER at the Eve can be around 0.46, which means that the Eve can hardly obtain any key information.

In the solutions provided in embodiments of the present disclosure, the first device sends the multiple first messages to enable the multiple second devices to generate respective keys, receives the multiple second messages, each of which is related to the key of the corresponding second device, and then sends the multiple third messages, where the different third message is used for the different second device to determine the group key. In this way, the first device and the multiple second devices can share secret information based on the group key, such that the security can be ensured, and the efficiency of sharing the secret information between the first device and the multiple second devices and/or between the multiple second devices can also be improved, thereby filling the gap in the related art.

Finally, the effect of the key generation method provided in embodiments of the present disclosure is described in combination with the related art.

There are two research directions for a key in the zero-power system. One is upper-layer-based key protocol research. However, due to limited capabilities, a zero-power device can only support a key protocol with low complexity, such as a random number generator, a lightweight protocol of the national institute of standards and technology (NIST), an XOR operation, and other encryption algorithms with lower complexity. Therefore, the upper-layer key protocol is easily cracked by an attacker with strong computing power. For example, the attacker with strong computing power can intercept transmitted key materials and calculate a shared key by using proof by exhaustion. Another key research direction is to combine a security mechanism with a physical layer, use the randomness and reciprocity of wireless channel characteristics to generate the shared key, and provide encryption protection that does not rely on computational complexity. A classic method for physical layer key generation mainly includes four stages: channel characteristic extraction, channel characteristic quantization, consistency negotiation, and privacy enhancement. Parameters of the channel characteristic extraction include received signal strength, channel impulse response, channel frequency response, etc. Since the received signal strength is easy to measure and the measuring has a low hardware requirement, the physical layer key generation for the zero-power device mostly relies on received signal strength measurement. However, due to factors such as signal noise, attenuation during signal propagation, etc., there is a deviation between received signal strength values measured by the reader and by the zero-power device, which leads to a higher key inconsistency rate. In addition, the physical-layer key research of the zero-power system only focuses on pairwise key generation between two legitimate devices, without considering group key research. For example, in smart meters, in order to share confidential information among a specific group of users, it is necessary to generate a group key for a set of internet of things (IoT) devices.

In the key generation method provided in embodiments of the present disclosure, in the key generation stage of any second device, the first device transmits continuous carriers (i.e., the multiple first messages) with random power that is only known to the first device. Any second device modulates a signal on the message and transmits the message to the first device. Since the channel has short-term reciprocity, the first device and any second device can obtain a consistent pair of a key and a verification key. Since the Eve uses a different channel from that between the first device and any second device, the Eve is unable to obtain the key, which ensures the security of the key pair between the first device and any second device. In addition, due to factors such as signal noise, attenuation during signal propagation, etc., there is a deviation between a received signal strength value measured by the first device and a received signal strength value measured by any second device. In the solutions provided in embodiments of the present disclosure, both the first device and any second device use a multi-level quantization method, which can help correct the deviation, thereby reducing the inconsistency rate of the pairwise key.

In the key generation method provided in embodiments of the present disclosure, in the group key generation and distribution stage, the first device generates the group key by using the self-assembling cross-bit operation, a matrix eigenvalue, or a matrix singular value, obtains calculation information of a group key based on the group key, and then broadcasts the calculation information of the group key to the multiple second devices. Since the calculation information of the group key is generated based on a verification key for a different second device and the group key, the Eve is unable to obtain the key of any second device, and thus the Eve is unable to correctly parse the group key.

The processing of the key generation method provided in embodiments of the present disclosure is implemented by using a zero-power system signaling interaction process in the related art, and there is no need to make significant changes to the existing standard signaling process, thereby ensuring high compatibility. In addition, with the key generation method provided in embodiments of the present disclosure, any second device (i.e., the zero-power device) is required to perform signal strength measurement, quantization, simple XOR operations, and other operations, and the first device (e.g., the reader) is required to perform the processing with high computational complexity, and thus this method has the advantage of low computational complexity on the zero-power device. Moreover, the key of any second device does not require multiple rounds of information negotiation, thus reducing the signaling interaction overhead of the second device, making it more power-efficient.

FIG. 14 is a schematic structural diagram of composition of a first device according to an embodiment of the present disclosure. The first device includes a first communication unit 1401. The first communication unit 1401 is configured to send multiple first messages to multiple second devices, where a different first message among the multiple first messages occupies a different time domain range, and the multiple first messages are used for the multiple second devices to generate keys. The first communication unit 1401 is configured to receive multiple second messages sent by the multiple second devices, where a different second message among the multiple second messages is related to a key of a different second device. The first communication unit 1401 is configured to send multiple third messages to the multiple second devices, where a different third message among the multiple third messages is used for a different second device to determine a group key.

The first device further includes a first processing unit 1402. The first processing unit 1402 is configured to determine a verification key for each of the multiple second devices based on the multiple second messages. The first processing unit 1402 is configured to, based on a determination that the verification key for each of the multiple second devices is consistent with a key of each of the multiple second devices, generate, by the first device, the group key based on the verification key for each of the multiple second devices.

The first processing unit is configured to obtain multiple keys to be calculated based on the verification key for each of the multiple second devices, and generate the group key by performing XOR operation on the multiple keys to be calculated.

The first processing unit is configured to obtain a target key to be calculated by adjusting, based on a preset algorithm, at least part of bits in a verification key for a target second device, where the target second device is one of the multiple second devices, and the target key to be calculated is one of the multiple keys to be calculated.

The preset algorithm is a self-assembling cross-bit operation.

The first processing unit is configured to obtain multiple sets of key elements of each of the multiple second devices based on the verification key for each of the multiple second devices, generate an initial matrix based on the multiple sets of key elements of each of the multiple second devices, and generate the group key based on the initial matrix.

The first processing unit is configured to convert the multiple sets of key elements of each of the multiple second devices into multiple values, and generate the initial matrix based on the multiple values corresponding to each of the multiple second devices.

The first processing unit is configured to perform one of the following. The first processing unit is configured to obtain one or more sub-matrices based on the initial matrix, determine an eigenvalue of each of the one or more sub-matrices, and generate the group key by quantizing the eigenvalue of each of the one or more sub-matrices. Alternatively, the first processing unit is configured to obtain multiple singular values of the initial matrix by performing SVD on the initial matrix, and generate the group key by quantizing the multiple singular values.

A target third message among the multiple third messages contains calculation information of a group key for a target second device, where the target second device is one of the multiple second devices, and the calculation information of the group key for the target second device is obtained by performing XOR operation based on a verification key for the target second device and the group key.

The first device further includes the first processing unit and the first communication unit. The first processing unit is configured to generate a random sequence at an update time of a group key, and obtain a first updated group key based on the random sequence and the group key. The first communication unit is configured to send multiple first updated information to the multiple second devices, where different first updated information among the multiple first updated information is used for a different second device to determine the first updated group key.

The first device further includes the first processing unit and the first communication unit. The first processing unit is configured to, in the case where the first device determines to add a third device, receive, by the first device, a fifth message sent by the third device, where the fifth message is related to a key of the third device. The first processing unit is configured to determine a verification key for the third device based on the fifth message. The first processing unit is configured to, based on a determination that the verification key for the third device is consistent with the key of the third device, generate a second updated group key based on verification keys for the multiple second devices and the verification key for the third device. The first communication unit is configured to send multiple second updated information to the multiple second devices and the third device, where different second updated information among the multiple second updated information is used for the third device and different devices among the multiple second devices to determine the second updated group key.

The first processing unit is configured to, in the case where the first processing unit receives first indication information, determine to add the third device, where the first indication information indicates to add the third device to a device group composed of the multiple second devices.

The first device further includes the first processing unit and the first communication unit. The first processing unit is configured to, in the case where the first device determines to delete an $h$-th second device among the multiple second devices, generate, by the first device, a third updated group key based on a verification key for each of the multiple second devices except the $h$-th second device, where $h$ is a positive integer. The first communication unit is configured to send multiple third updated information to the multiple second devices except the $h$-th second device, where the multiple third updated information is used for different second devices among the multiple second devices except the $h$-th second device to determine the third updated group key.

The first processing unit is configured to, in the case where the first processing unit receives second indication information, determine to delete the $h$-th second device among the multiple second devices, where the second indication information indicates to delete the $h$-th second device from a device group composed of the multiple second devices.

A target second message among the multiple second messages further contains multiple quantization offsets of a target second device, and the target second device is one of the multiple second devices. The first processing unit is configured to obtain a target path loss value based on received strength of the target second message, where the target path loss value is a value of path loss between the first device and the target second device. The first processing unit is configured to obtain multiple received strength estimation values of the target second device based on the target path loss value and transmission strength of the multiple first messages, where the multiple received strength estimation values include an estimation value of received strength of each of the multiple first messages received by the target second device. The first processing unit is configured to obtain the verification key for the target second device based on the multiple received strength estimation values of the target second device and the multiple quantization offsets of the target second device.

The first processing unit is configured to obtain an estimation value of target average strength based on the multiple received strength estimation values of the target second device. The first processing unit is configured to generate multiple processed strength values based on the estimation value of the target average strength and the multiple received strength estimation values of the target second device. The first processing unit is configured to obtain multiple quantization reference estimation values based on the multiple processed strength values and the multiple quantization offsets of the target second device. The first processing unit is configured to obtain the verification key for the target second device by quantizing the multiple quantization reference estimation values.

In the case where different second messages among the multiple second messages have different starting transmission times and/or different second messages among the multiple second messages occupy different frequency domain ranges, the received strength of the target second message is measured by the first device. Alternatively, in the case where different second messages among the multiple second messages have the same starting transmission time and different second messages among the multiple second messages occupy the same frequency domain range, the received strength of the target second message is determined by the first device based on SIC.

The transmission power of each of the multiple first messages is a random transmission power.

The first communication unit is configured to send a fourth message to the multiple second devices, where the fourth message contains the number of first messages used for generating the keys and a timing parameter, and the timing parameter is used for each of the multiple second devices to determine a starting transmission time of a second message.

A starting transmission time of the target second message among the multiple second messages is a time when a count value of a target counter of a target second device is zero, the target second device is one of the multiple second devices, the count value of the target counter is decremented when the target second device receives one of the multiple first messages, and a maximum value of the count value of the target counter is determined based on the timing parameter.

The maximum value of the count value of the target counter is determined by the target second device based on the timing parameter and the number of first messages used for generating the keys.

The timing parameter includes a specified count value, and the maximum value of the count value of the target counter is the specified count value.

The first device is a first terminal or a first network device, and the second device is a zero-power device.

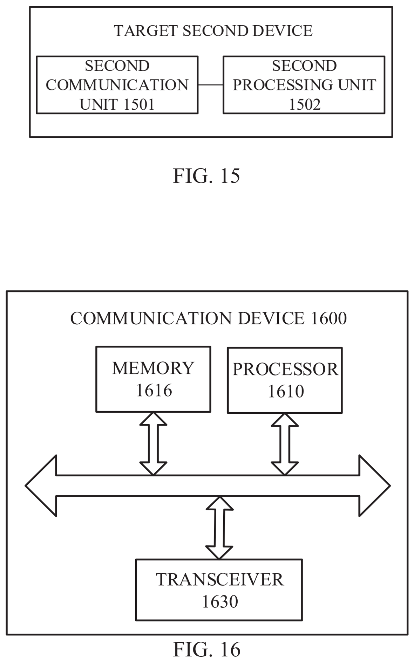

FIG. 15 is a schematic structural diagram of composition of the target second device according to an embodiment of the present disclosure. The target second device includes a second communication unit 1501. The second communication unit 1501 is configured to receive multiple first messages sent by a first device, where a different first message among the multiple first messages occupies a different time domain range. The second communication unit 1501 is configured to send a target second message to the first device, where the target second message is related to a key of the target second device, the target second device is one of multiple second devices, and the key of the target second device is generated based on the multiple first messages. The second communication unit 1501 is configured to receive a target third message sent by the first device, where the target third message is used by the target second device to determine a group key.

The target third message contains calculation information of a group key for the target second device, and the second device further includes a second processing unit 1502. The second processing unit 1502 is configured to obtain the group key by performing XOR operation based on the calculation information of the group key for the target second device and the key of the target second device.

The second device further includes the second processing unit. The second processing unit is configured to, in the case where the second communication unit receives target first updated information sent by the first device, obtain a first updated group key by performing XOR operation based on target first updated calculation information and the key of the target second device, where the target first updated information is generated by the first device at an update time of the group key, and the target first updated information contains target first updated calculation information for the target second device.

The second device further includes the second processing unit. The second processing unit is configured to, in the case where the second communication unit receives target second updated information sent by the first device, obtain a second updated group key based on the target second updated information, where the target second updated information is sent when a third device is added to a device group composed of the multiple second devices, and the target second updated information is used by the target second device to determine the second updated group key.

The second device further includes the second processing unit. The second processing unit is configured to, in the case where the second communication unit receives target third updated information sent by the first device, obtain a third updated group key based on the target third updated information, where the target third updated information is sent when an $h$-th second device is deleted from a device group composed of the multiple second devices, the target third updated information is used by the target second device to determine the third updated group key, and $h$ is a positive integer.

The second device further includes the second processing unit. The second processing unit is configured to generate the key of the target second device based on received strength of each of the multiple first messages.

The second processing unit is configured to obtain average received strength based on the received strength of each of the multiple first messages, obtain multiple processed signal-strength based on the average received strength and the received strength of each of the multiple first messages, obtain multiple quantization reference values based on the multiple processed signal-strength, and generate the key of the target second device by quantizing the multiple quantization reference values.

The target second message further contains multiple quantization offsets of the target second device, and the second processing unit is configured to obtain the multiple quantization offsets of the target second device based on the multiple quantization reference values and the multiple processed signal-strength.

The second communication unit is configured to receive a fourth message sent by the first device, where the fourth message contains the number of first messages used for generating the key and a timing parameter, and the timing parameter is used for determining a starting transmission time of the target second message.

The starting transmission time of the target second message is a time when a count value of a target counter of the target second device is zero, the count value of the target counter is decremented when the target second device one of the multiple first messages, and a maximum value of the count value of the target counter is determined based on the timing parameter.

The maximum value of the count value of the target counter is determined by the target second device based on the timing parameter and the number of first messages used for generating the key.

The timing parameter includes a specified count value, and the maximum value of the count value of the target counter is the specified count value.

The target second device is a zero-power device.

The first device and the target second device in embodiments of the present disclosure can implement corresponding functions of the first device and the target second device in the foregoing embodiment of the key generation method. For the procedure, function, implementation, and advantage corresponding to each module (sub-module, unit, assembly, etc.) in the first device and the target second device, reference may be made to the corresponding descriptions in the foregoing method embodiments, which will not be repeated herein. It may be noted that, the functions of various modules (sub-modules, units, assemblies, etc.) in the first device and the target second device in embodiments of the present disclosure may be implemented by different modules (sub-modules, units, assemblies, etc.), or may be implemented by the same module (sub-module, unit, assembly, etc.).

FIG. 16 is a schematic structural diagram of a communication device 1600 according to embodiments of the present disclosure. The communication device 1600 includes a processor 1610. The processor 1610 can invoke and execute a computer program stored in a memory, to cause the communication device 1600 to implement the method in embodiments of the present disclosure. In a possible embodiment, the communication device 1600 may further include a memory 1620. The processor 1610 can invoke and execute a computer program stored in the memory 1620, to cause the communication device 1600 to implement the method in embodiments of the present disclosure. The memory 1620 may be a separate device independent of the processor 1610, or may be integrated into the processor 1610. In a possible embodiment, the communication device 1600 may further include a transceiver 1630. The processor 1610 can control the transceiver 1630 to communicate with other devices, and specifically, to send information or data to other devices or receive information or data sent by other devices. The transceiver 1630 may include a transmitter and a receiver. The transceiver 1630 can further include an antenna, where one or more antennas may be provided. In a possible embodiment, the communication device 1600 may be the first device in embodiments of the present disclosure, and the communication device 1600 may implement corresponding operations implemented by the first device in various methods in embodiments of the present disclosure, which will not be repeated herein for the sake of brevity. In a possible embodiment, the communication device 1600 may be the target second device in embodiments of the present disclosure, and the communication device 1600 may implement corresponding operations implemented by the target second device in various methods in embodiments of the present disclosure, which will not be repeated herein for the sake of brevity.

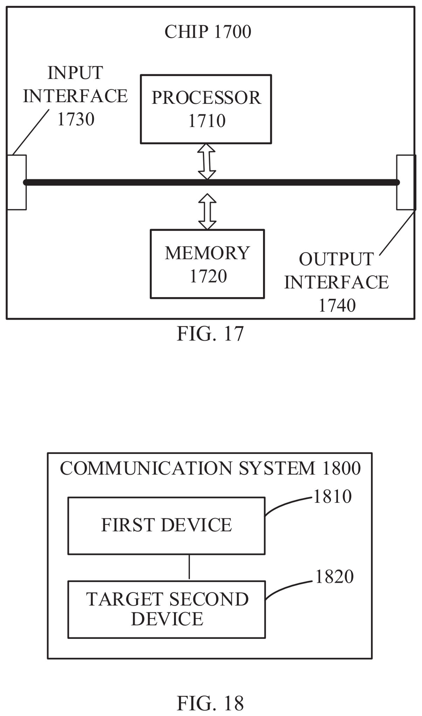

FIG. 17 is a schematic structural diagram of a chip 1700 according to embodiments of the present disclosure. The chip 1700 includes a processor 1710. The processor 1710 can invoke and execute a computer program stored in a memory, to implement the method in embodiments of the present disclosure. In a possible embodiment, the chip 1700 may further include a memory 1720. The processor 1710 can invoke and execute a computer program stored in the memory 1720, to implement the method performed by the first device or the target second device in embodiments of the present disclosure. The memory 1720 may be a separate device independent of the processor 1710, or may be integrated into the processor 1710. In a possible embodiment, the chip 1700 may further include an input interface 1730. The processor 1710 can control the input interface 1730 to communicate with other devices or chips, and specifically, to obtain information or data sent by other devices or chips. In a possible embodiment, the chip 1700 may further include an output interface 1740. The processor 1710 can control the output interface 1740 to communicate with other devices or chips, and specifically, to output information or data to other devices or chips.

In a possible embodiment, the chip may be applied to the first device in embodiments of the present disclosure, and the chip may implement corresponding operations implemented by the first device in various methods in embodiments of the present disclosure, which will not be described again herein for the sake of brevity. In a possible embodiment, the chip may be applied to the target second device in embodiments of the present disclosure, and the chip may implement corresponding operations implemented by the target second device in various methods in embodiments of the present disclosure, which will not be described again herein for the sake of brevity. The chip applicable to the first device and the target second device may be the same chip or different chips. It may be understood that, the chip mentioned in embodiments of the present disclosure can also be referred to as a system-on-chip (SOC). The processor may be a general-purpose processor, a digital signal processor (DSP), an application-specific integrated circuit (ASIC), a field programmable gate array (FPGA), or other programmable logic devices, discrete gates or transistor logic devices, discrete hardware components. The general-purpose processor may be a microprocessor, any conventional processor, etc. The memory may be a volatile memory or a non-volatile memory, or can include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random-access memory (RAM). It can be understood that, the memory above is intended for illustration rather than limitation. For example, the memory in embodiments of the present disclosure can also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a direct rambus RAM (DR RAM), etc. In other words, the memory in embodiments of the present disclosure is intended to include, but is not limited to, these and any other suitable types of memory.

FIG. 18 is a schematic block diagram of a communication system 1800 according to embodiments of the present disclosure. The communication system 1800 includes a first device 1810 and a target second device 1810. The first device 1810 can be configured to implement corresponding functions implemented by the first device in the foregoing method, and the target second device 1820 can be configured to implement corresponding functions implemented by the target second device in the foregoing method, which will not be repeated herein for the sake of brevity.

All or some of the foregoing embodiment can be implemented through software, hardware, firmware, or any other combination thereof. When implemented by software, all or some of the foregoing embodiment can be implemented in the form of a computer program product. The computer program product includes one or more computer instructions. When the computer instructions are applied and executed on a computer, all or some of the operations or functions of embodiments of the present disclosure are performed. The computer may be a general-purpose computer, a special-purpose computer, a computer network, or other programmable apparatuses. The computer instruction may be stored in a computer-readable storage medium, or sent from one computer-readable storage medium to another computer-readable storage medium. For example, the computer instruction may be sent from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device such as a server, a data center, or the like which integrates one or more usable media. The usable medium may be a magnetic medium (such as a soft disk, a hard disk, or a magnetic tape), an optical medium (such as a digital video disc (DVD)), or a semiconductor medium (such as a solid state disk (SSD)), etc.

It may be understood that, in various embodiments of the present disclosure, the magnitude of a sequence number of each process does not mean an order of execution, and the order of execution of each process may be determined by its function and internal logic and shall not constitute any limitation to the implementation of embodiments of the present disclosure. It will be evident to those skilled in the art that, for the sake of convenience and simplicity, in terms of the specific working processes of the foregoing systems, apparatuses, and units, reference may be made to the corresponding processes in the foregoing method embodiments, which is not repeated herein. The foregoing elaborations are merely embodiments of the present disclosure, but are not intended to limit the protection scope of the present disclosure. Any variation or replacement easily thought of by those skilled in the art in the technical scope disclosed in the present disclosure shall belong to the protection scope of the present disclosure. Therefore, the protection scope of the present disclosure shall be subject to the protection scope of the claims.

**Claims**

1. A key generation method, comprising:

    sending, by a first device, a plurality of first messages to a plurality of second devices, wherein a different first message among the plurality of first messages occupies a different time domain range, and the plurality of first messages are used for the plurality of second devices to generate keys;
    receiving, by the first device, a plurality of second messages sent by the plurality of second devices, wherein a different second message among the plurality of second messages is related to a key of a different second device; and
    sending, by the first device, a plurality of third messages to the plurality of second devices, wherein a different third message among the plurality of third messages is used for a different second device to determine a group key.

2. The method of claim 1, further comprising:

    determining, by the first device, a verification key for each of the plurality of second devices based on the plurality of second messages; and

based on a determination that the verification key for each of the plurality of second devices is consistent with the key of each of the plurality of second devices, generating, by the first device, the group key based on the verification key for each of the plurality of second devices.

3. The method of claim 2, wherein generating, by the first device, the group key based on the verification key for each of the plurality of second devices comprises:

obtaining, by the first device, a plurality of keys to be calculated based on the verification key for each of the plurality of second devices; and

generating, by the first device, the group key by performing exclusive OR (XOR) operation on the plurality of keys to be calculated.

4. The method of claim 3, wherein obtaining, by the first device, the plurality of keys to be calculated based on the verification key for each of the plurality of second devices comprises:
obtaining, by the first device, a target key to be calculated by adjusting, based on a preset algorithm, at least part of bits in a verification key for a target second device, wherein the target second device is one of the plurality of second devices, and the target key to be calculated is one of the plurality of keys to be calculated.

5. The method of claim 4, wherein the preset algorithm is a self-assembling cross-bit operation.

6. The method of claim 2, wherein generating, by the first device, the group key based on the verification key for each of the plurality of second devices comprises:

obtaining, by the first device, a plurality of sets of key elements of each of the plurality of second devices based on the verification key for each of the plurality of second devices;

generating, by the first device, an initial matrix based on the plurality of sets of key elements of each of the plurality of second devices; and

generating, by the first device, the group key based on the initial matrix.

7. The method of claim 6, wherein generating, by the first device, the initial matrix based on the plurality of sets of key elements of each of the plurality of second devices comprises:
converting, by the first device, the plurality of sets of key elements of each of the plurality of second devices into a plurality of values, and generating, by the first device, the initial matrix based on the plurality of values corresponding to each of the plurality of second devices.

8. The method of claim 7, wherein generating, by the first device, the group key based on the initial matrix comprises one of:

obtaining, by the first device, one or more sub-matrices based on the initial matrix, determining, by the first device, an eigenvalue of each of the one or more sub-matrices, and generating, by the first device, the group key by quantizing the eigenvalue of each of the one or more sub-matrices; and

obtaining, by the first device, a plurality of singular values of the initial matrix by performing singular value decomposition (SVD) on the initial matrix, and generating, by the first device, the group key by quantizing the plurality of singular values.

9. The method of any one of claims 1 to 8, wherein a target third message among the plurality of third messages contains calculation information of a group key for a target second device, the target second device is one of the plurality of second devices, and the calculation information of the group key for the target second device is obtained by performing XOR operation based on a verification key for the target second device and the group key.

10. The method of any one of claims 1 to 9, further comprising:

generating, by the first device, a random sequence at an update time of the group key;

obtaining, by the first device, a first updated group key based on the random sequence and the group key; and

sending, by the first device, a plurality of first updated information to the plurality of second devices, wherein different first updated information among the plurality of first updated information is used for a different second device to determine the first updated group key.

**11.** The method of any one of claims 1 to 9, further comprising:

in a case where the first device determines to add a third device, receiving, by the first device, a fifth message sent by the third device, wherein the fifth message is related to a key of the third device;

determining, by the first device, a verification key for the third device based on the fifth message;

based on a determination that the verification key for the third device is consistent with the key of the third device, generating, by the first device, a second updated group key based on verification keys for the plurality of second devices and the verification key for the third device; and

sending, by the first device, a plurality of second updated information to the plurality of second devices and the third device, wherein different second updated information among the plurality of second updated information is used for the third device and different devices among the plurality of second devices to determine the second updated group key.

**12.** The method of claim 11, further comprising:

in a case where the first device receives first indication information, determining, by the first device, to add the third device, wherein the first indication information indicates to add the third device to a device group composed of the plurality of second devices.

**13.** The method of any one of claims 1 to 9, further comprising:

in a case where the first device determines to delete an $h$-th second device among the plurality of second devices, generating, by the first device, a third updated group key based on a verification key for each of the plurality of second devices except the $h$-th second device, wherein $h$ is a positive integer; and

sending, by the first device, a plurality of third updated information to the plurality of second devices except the $h$-th second device, wherein the plurality of third updated information is used for different second devices among the plurality of second devices except the $h$-th second device to determine the third updated group key.

**14.** The method of claim 13, further comprising:

in a case where the first device receives second indication information, determining, by the first device, to delete the $h$-th second device among the plurality of second devices, wherein the second indication information indicates to delete the $h$-th second device from a device group composed of the plurality of second devices.

**15.** The method of any one of claims 2 to 8, wherein

a target second message among the plurality of second messages further contains a plurality of quantization offsets of a target second device, and the target second device is one of the plurality of second devices; and

determining, by the first device, the verification key for each of the plurality of second devices based on the plurality of second messages comprises:

obtaining, by the first device, a target path loss value based on received strength of the target second message, wherein the target path loss value is a value of path loss between the first device and the target second device;

obtaining, by the first device, a plurality of received strength estimation values of the target second device based on the target path loss value and transmission strength of the plurality of first messages, wherein the plurality of received strength estimation values comprise an estimation value of received strength of each of the plurality of first messages received by the target second device; and

obtaining, by the first device, the verification key for the target second device based on the plurality of received strength estimation values of the target second device and the plurality of quantization offsets of the target second device.

**16.** The method of claim 15, wherein obtaining, by the first device, the verification key for the target second device based on the plurality of received strength estimation values of the target second device and the plurality of quantization offsets of the target second device comprises:

obtaining, by the first device, an estimation value of target average strength based on the plurality of received strength estimation values of the target second device;

generating, by the first device, a plurality of processed strength values based on the estimation value of the target average strength and the plurality of received strength estimation values of the target second device;

obtaining, by the first device, a plurality of quantization reference estimation values based on the plurality of processed strength values and the plurality of quantization offsets of the target second device; and

obtaining, by the first device, the verification key for the target second device by quantizing the plurality of quantization reference estimation values.

17. The method of claim 15 or 16, wherein

in a case where different second messages among the plurality of second messages have different starting transmission times and/or different second messages among the plurality of second messages occupy different frequency domain ranges, the received strength of the target second message is measured by the first device; or in a case where different second messages among the plurality of second messages have a same starting transmission time and different second messages among the plurality of second messages occupy a same frequency domain range, the received strength of the target second message is determined by the first device based on self-interference cancellation (SIC).

18. The method of any one of claims 1 to 17, wherein a transmission power of each of the plurality of first messages is a random transmission power.

19. The method of any one of claims 1 to 18, further comprising:
sending, by the first device, a fourth message to the plurality of second devices, wherein the fourth message contains a number of first messages used for generating the keys and a timing parameter, and the timing parameter is used for each of the plurality of second devices to determine a starting transmission time of a second message.

20. The method of claim 19, wherein a starting transmission time of a target second message among the plurality of second messages is a time when a count value of a target counter of a target second device is zero, the target second device is one of the plurality of second devices, the count value of the target counter is decremented when the target second device receives one of the plurality of first messages, and a maximum value of the count value of the target counter is determined based on the timing parameter.

21. The method of claim 20, wherein the maximum value of the count value of the target counter is determined by the target second device based on the timing parameter and the number of first messages used for generating the keys.

22. The method of claim 20, wherein the timing parameter comprises a specified count value, and the maximum value of the count value of the target counter is the specified count value.

23. The method of any one of claims 1 to 22, wherein the first device is a first terminal or a first network device, and the second device is a zero-power device.

24. A key generation method, comprising:

receiving, by a target second device, a plurality of first messages sent by a first device, wherein a different first message among the plurality of first messages occupies a different time domain range;
sending, by the target second device, a target second message to the first device, wherein the target second message is related to a key of the target second device, the target second device is one of a plurality of second devices, and the key of the target second device is generated based on the plurality of first messages; and
receiving, by the target second device, a target third message sent by the first device,

wherein the target third message is used by the target second device to determine a group key.

25. The method of claim 24, wherein the target third message contains calculation information of a group key for the target second device, and the method further comprises:
obtaining, by the target second device, the group key by performing exclusive OR (XOR) operation based on the calculation information of the group key for the target second device and the key of the target second device.

26. The method of claim 24 or 25, further comprising:
in a case where the target second device receives target first updated information sent by the first device, obtaining, by the target second device, a first updated group key by performing XOR operation based on target first updated calculation information and the key of the target second device, wherein the target first updated information is generated by the first device at an update time of the group key, and the target first updated information contains the target first updated calculation information for the target second device.

27. The method of claim 24 or 25, further comprising:
in a case where the target second device receives target second updated information sent by the first device, obtaining, by the target second device, a second updated group key based on the target second updated information, wherein the target second updated information is sent when a third device is added to a device group composed of the plurality of second devices, and the target second updated information is used by the target second device to determine the second updated group key.

28. The method of claim 24 or 25, further comprising:
in a case where the target second device receives target third updated information sent by the first device, obtaining, by the target second device, a third updated group key based on the target third updated information, wherein the target third updated information is sent when an $h$-th second device is deleted from a device group composed of the plurality of second devices, the target third updated information is used by the target second device to determine the third updated group key, and $h$ is a positive integer.

29. The method of claim 24, further comprising:
generating, by the target second device, the key of the target second device based on received strength of each of the plurality of first messages.

30. The method of claim 29, wherein generating, by the target second device, the key of the target second device based on the received strength of each of the plurality of first messages comprises:

obtaining, by the target second device, average received strength based on the received strength of each of the plurality of first messages;
obtaining, by the target second device, a plurality of processed signal-strength based on the average received strength and the received strength of each of the plurality of first messages;
obtaining, by the target second device, a plurality of quantization reference values based on the plurality of processed signal-strength; and
generating, by the target second device, the key of the target second device by quantizing the plurality of quantization reference values.

31. The method of claim 30, wherein the target second message further contains a plurality of quantization offsets of the target second device, and the method further comprises:
obtaining, by the target second device, the plurality of quantization offsets of the target second device based on the plurality of quantization reference values and the plurality of processed signal-strength.

32. The method of any one of claims 24 to 31, further comprising:
receiving, by the target second device, a fourth message sent by the first device, wherein the fourth message contains a number of first messages used for generating the key and a timing parameter, and the timing parameter is used for determining a starting transmission time of the target second message.

33. The method of claim 32, wherein the starting transmission time of the target second message is a time when a count value of a target counter of the target second device is zero, the count value of the target counter is decremented when the target second device receives one of the plurality of first messages, and a maximum value of the count value of the target counter is determined based on the timing parameter.

34. The method of claim 33, wherein the maximum value of the count value of the target counter is determined by the target second device based on the timing parameter and the number of first messages used for generating the key.

35. The method of claim 33, wherein the timing parameter comprises a specified count value, and the maximum value of the count value of the target counter is the specified count value.

36. The method of any one of claims 24 to 35, wherein the target second device is a zero-power device.

37. A first device, comprising:

a first communication unit configured to:

> send a plurality of first messages to a plurality of second devices, wherein a different first message among the plurality of first messages occupies a different time domain range, and the plurality of first messages are used for the plurality of second devices to generate keys;
> receive a plurality of second messages sent by the plurality of second devices,

wherein a different second message among the plurality of second messages is related to a key of a different second device; and
send a plurality of third messages to the plurality of second devices, wherein a different third message among the plurality of third messages is used for a different second device to determine a group key.

**38.** The first device of claim 37, further comprising:
a first processing unit configured to:

> determine a verification key for each of the plurality of second devices based on the plurality of second messages; and
> based on a determination that the verification key for each of the plurality of second devices is consistent with a key of each of the plurality of second devices, generate, by the first device, the group key based on the verification key for each of the plurality of second devices.

**39.** The first device of claim 38, wherein the first processing unit is configured to:

> obtain a plurality of keys to be calculated based on the verification key for each of the plurality of second devices; and
> generate the group key by performing exclusive OR (XOR) operation on the plurality of keys to be calculated.

**40.** The first device of claim 39, wherein the first processing unit is configured to obtain a target key to be calculated by adjusting, based on a preset algorithm, at least part of bits in a verification key for a target second device, wherein the target second device is one of the plurality of second devices, and the target key to be calculated is one of the plurality of keys to be calculated.

**41.** The first device of claim 40, the preset algorithm is a self-assembling cross-bit operation.

**42.** The first device of claim 38, wherein the first processing unit is configured to:

> obtain a plurality of sets of key elements of each of the plurality of second devices based on the verification key for each of the plurality of second devices;
> generate an initial matrix based on the plurality of sets of key elements of each of the plurality of second devices; and
> generate the group key based on the initial matrix.

**43.** The first device of claim 42, wherein the first processing unit is configured to convert the plurality of sets of key elements of each of the plurality of second devices into a plurality of values, and generate the initial matrix based on the plurality of values corresponding to each of the plurality of second devices.

**44.** The first device of claim 43, wherein the first processing unit is configured to perform one of:

> obtain one or more sub-matrices based on the initial matrix, determine an eigenvalue of each of the one or more sub-matrices, and generate the group key by quantizing the eigenvalue of each of the one or more sub-matrices; and
> obtain a plurality of singular values of the initial matrix by performing singular value decomposition (SVD) on the initial matrix, and generate the group key by quantizing the plurality of singular values.

**45.** The first device of any one of claims 37 to 44, wherein a target third message among the plurality of third messages contains calculation information of a group key for a target second device, the target second device is one of the plurality of second devices, and the calculation information of the group key for the target second device is obtained by performing XOR operation based on a verification key for the target second device and the group key.

**46.** The first device of any one of claims 37 to 45, further comprising:

the first processing unit configured to generate a random sequence at an update time of the group key, and obtain a first updated group key based on the random sequence and the group key; and
the first communication unit configured to send a plurality of first updated information to the plurality of second devices, wherein different first updated information among the plurality of first updated information is used for a different second device to determine the first updated group key.

**47.** The first device of any one of claims 37 to 46, further comprising:

the first processing unit configured to:

in a case where the first device determines to add a third device, receive, by the first device, a fifth message sent by the third device, wherein the fifth message is related to a key of the third device;
determine a verification key for the third device based on the fifth message; and
based on a determination that the verification key for the third device is consistent with the key of the third device, generate a second updated group key based on verification keys for the plurality of second devices and the verification key for the third device; and

the first communication unit configured to:
send a plurality of second updated information to the plurality of second devices and the third device, wherein different second updated information among the plurality of second updated information is used for the third device and different devices among the plurality of second devices to determine the second updated group key.

**48.** The first device of claim 47, wherein the first processing unit is configured to, in a case where the first processing unit receives first indication information, determine to add the third device, wherein the first indication information indicates to add the third device to a device group composed of the plurality of second devices.

**49.** The first device of any one of claims 37 to 46, further comprising:

the first processing unit configured to, in a case where the first device determines to delete an $h$-th second device among the plurality of second devices, generate, by the first device, a third updated group key based on a verification key for each of the plurality of second devices except the $h$-th second device, wherein $h$ is a positive integer; and
the first communication unit configured to send a plurality of third updated information to the plurality of second devices except the $h$-th second device, wherein the plurality of third updated information is used for different second devices among the plurality of second devices except the $h$-th second device to determine the third updated group key.

**50.** The first device of claim 49, wherein the first processing unit is configured to, in a case where the first processing unit receives second indication information, determine to delete the $h$-th second device among the plurality of second devices, wherein the second indication information indicates to delete the $h$-th second device from a device group composed of the plurality of second devices.

**51.** The first device of any one of claims 38 to 44, wherein

a target second message among the plurality of second messages further contains a plurality of quantization offsets of a target second device, and the target second device is one of the plurality of second devices; and
the first processing unit is configured to:

obtain a target path loss value based on received strength of the target second message, wherein the target path loss value is a value of path loss between the first device and the target second device;
obtain a plurality of received strength estimation values of the target second device based on the target path loss value and transmission strength of the plurality of first messages, wherein the plurality of received strength estimation values comprise ann estimation value of received strength of each of the plurality of first messages received by the target second device; and
obtain a verification key for the target second device based on the plurality of received strength estimation values of the target second device and the plurality of quantization offsets of the target second device.

52. The first device of claim 51, wherein the first processing unit is configured to:

obtain an estimation value of target average strength based on the plurality of received strength estimation values of the target second device;
generate a plurality of processed strength values based on the estimation value of the target average strength and the plurality of received strength estimation values of the target second device;
obtain a plurality of quantization reference estimation values based on the plurality of processed strength values and the plurality of quantization offsets of the target second device; and
obtain the verification key for the target second device by quantizing the plurality of quantization reference estimation values.

53. The first device of claim 51 or 52, wherein

in a case where different second messages among the plurality of second messages have different starting transmission times and/or different second messages among the plurality of second messages occupy different frequency domain ranges, the received strength of the target second message is measured by the first device; or
in a case where different second messages among the plurality of second messages have a same starting transmission time and different second messages among the plurality of second messages occupy a same frequency domain range, the received strength of the target second message is determined by the first device based on self-interference cancellation (SIC).

54. The first device of any one of claims 37 to 53, wherein a transmission power of each of the plurality of first messages is a random transmission power.

55. The first device of any one of claims 37 to 54, wherein the first communication unit is configured to send a fourth message to the plurality of second devices, wherein the fourth message contains a number of first messages used for generating the keys and a timing parameter, and the timing parameter is used for each of the plurality of second devices to determine a starting transmission time of a second message.

56. The first device of claim 55, wherein a starting transmission time of a target second message among the plurality of second messages is a time when a count value of a target counter of a target second device is zero, the target second device is one of the plurality of second devices, the count value of the target counter is decremented when the target second device receives one of the plurality of first messages, and a maximum value of the count value of the target counter is determined based on the timing parameter.

57. The first device of claim 56, wherein the maximum value of the count value of the target counter is determined by the target second device based on the timing parameter and the number of first messages used for generating the keys.

58. The first device of claim 56, wherein the timing parameter comprises a specified count value, and the maximum value of the count value of the target counter is the specified count value.

59. The first device of any one of claims 37 to 58, wherein the first device is a first terminal or a first network device, and the second device is a zero-power device.

60. A target second device, comprising:
a second communication unit configured to:

receive a plurality of first messages sent by a first device, wherein a different first message among the plurality of first messages occupies a different time domain range;
send a target second message to the first device, wherein the target second message is related to a key of the target second device, the target second device is one of a plurality of second devices, and the key of the target second device is generated based on the plurality of first messages; and
receive a target third message sent by the first device, wherein the target third message is used by the target second device to determine a group key.

61. The target second device of claim 60, wherein the target third message contains calculation information of a group key for the target second device, and the second device further comprises a second processing unit configured to obtain the group key by performing exclusive OR (XOR) operation based on the calculation information of a group key for the target second device and the key of the target second device.

**62.** The target second device of claim 60 or 61, further comprising:
a second processing unit configured to, in a case where the second communication unit receives target first updated information sent by the first device, obtain a first updated group key by performing XOR operation based on target first updated calculation information and the key of the target second device, wherein the target first updated information is generated by the first device at an update time of the group key, and the target first updated information contains the target first updated calculation information for the target second device.

**63.** The target second device of claim 60 or 61, further comprising:
a second processing unit configured to, in a case where the second communication unit receives target second updated information sent by the first device, obtain a second updated group key based on the target second updated information, wherein the target second updated information is sent when a third device is added to a device group composed of the plurality of second devices, and the target second updated information is used by the target second device to determine the second updated group key.

**64.** The target second device of claim 60 or 61, further comprising:
a second processing unit configured to, in a case where the second communication unit receives target third updated information sent by the first device, obtain a third updated group key based on the target third updated information, wherein the target third updated information is sent when an $h$-th second device is deleted from a device group composed of the plurality of second devices, the target third updated information is used by the target second device to determine the third updated group key, and $h$ is a positive integer.

**65.** The target second device of claim 60, further comprising:
a second processing unit configured to generate the key of the target second device based on received strength of each of the plurality of first messages.

**66.** The target second device of claim 65, wherein the second processing unit is configured to obtain average received strength based on the received strength of each of the plurality of first messages, obtain a plurality of processed signal-strength based on the average received strength and the received strength of each of the plurality of first messages, obtain a plurality of quantization reference values based on the plurality of processed signal-strength, and generate the key of the target second device by quantizing the plurality of quantization reference values.

**67.** The target second device of claim 66, wherein the target second message further contains a plurality of quantization offsets of the target second device, and the second processing unit is configured to obtain the plurality of quantization offsets of the target second device based on the plurality of quantization reference values and the plurality of processed signal-strength.

**68.** The target second device of any one of claims 65 to 67, wherein the second communication unit is configured to receive a fourth message sent by the first device, wherein the fourth message contains a number of first messages used for generating the key and a timing parameter, and the timing parameter is used for determining a starting transmission time of the target second message.

**69.** The target second device of claim 68, wherein the starting transmission time of the target second message is a time when a count value of a target counter of the target second device is zero, the count value of the target counter is decremented when the target second device one of the plurality of first messages, and a maximum value of the count value of the target counter is determined based on the timing parameter.

**70.** The target second device of claim 69, wherein the maximum value of the count value of the target counter is determined by the target second device based on the timing parameter and the number of first messages used for generating the key.

**71.** The target second device of claim 69, wherein the timing parameter comprises a specified count value, and the maximum value of the count value of the target counter is the specified count value.

**72.** The target second device of any one of claims 60 to 71, wherein the target second device is a zero-power device.

**73.** A first device, comprising:

a transceiver;
a memory configured to store a computer program; and
a processor configured to invoke and execute the computer program stored in the memory, to cause the first device to perform the method of any one of claims 1 to 23.

74. A target second device, comprising:

a transceiver;
a memory configured to store a computer program; and
a processor configured to invoke and execute the computer program stored in the memory, to cause the second device to perform the method of any one of claims 24 to 36.

75. A chip, comprising:
a processor configured to invoke and execute a computer program stored in a memory, to cause a device equipped with the chip to perform the method of any one of claims 1 to 23 or claims 24 to 36.

76. A computer-readable storage medium configured to store a computer program which, when executed by a device, causes the device to perform the method of any one of claims 1 to 23 or claims 24 to 36.

77. A computer program product comprising computer program instructions that cause a computer to perform the method of any one of claims 1 to 23 or claims 24 to 36.

78. A computer program being operable with a computer to perform the method of any one of claims 1 to 23 or claims 24 to 36.

FIG. 1

FIG. 2

FIRST DEVICE SENDS MULTIPLE FIRST MESSAGES TO MULTIPLE SECOND DEVICES, WHERE DIFFERENT FIRST MESSAGE AMONG MULTIPLE FIRST MESSAGES OCCUPIES DIFFERENT TIME DOMAIN RANGE, AND MULTIPLE FIRST MESSAGES ARE USED FOR MULTIPLE SECOND DEVICES TO GENERATE KEYS — S310

FIRST DEVICE RECEIVES MULTIPLE SECOND MESSAGES SENT BY MULTIPLE SECOND DEVICES, WHERE DIFFERENT SECOND MESSAGE AMONG MULTIPLE SECOND MESSAGES IS RELATED TO KEY OF DIFFERENT SECOND DEVICE — S320

FIRST DEVICE SENDS MULTIPLE THIRD MESSAGES TO MULTIPLE SECOND DEVICES, WHERE DIFFERENT THIRD MESSAGE AMONG MULTIPLE THIRD MESSAGES IS USED FOR DIFFERENT SECOND DEVICE TO DETERMINE GROUP KEY — S330

FIG. 3

TARGET SECOND DEVICE RECEIVES MULTIPLE FIRST MESSAGES SENT BY FIRST DEVICE, WHERE DIFFERENT FIRST MESSAGE AMONG MULTIPLE FIRST MESSAGES OCCUPIES DIFFERENT TIME DOMAIN RANGE — S410

TARGET SECOND DEVICE SENDS TARGET SECOND MESSAGE TO FIRST DEVICE, WHERE TARGET SECOND MESSAGE IS RELATED TO KEY OF TARGET SECOND DEVICE, TARGET SECOND DEVICE IS ONE OF MULTIPLE SECOND DEVICES, AND KEY OF TARGET SECOND DEVICE IS GENERATED BASED ON MULTIPLE FIRST MESSAGES — S420

TARGET SECOND DEVICE RECEIVES TARGET THIRD MESSAGE SENT BY FIRST DEVICE, WHERE TARGET THIRD MESSAGE IS USED BY TARGET SECOND DEVICE TO DETERMINE GROUP KEY — S430

FIG. 4

FIG. 5

FIG. 6

READER

TARGET TAG

S701, READER BROADCASTS QUERY COMMAND

S702, DETERMINE INITIAL VALUE OF COUNT VALUE OF TARGET COUNTER

S703, READER SENDS FIRST FIRST-MESSAGE WITH RANDOM TRANSMISSION POWER

. . .

S703, READER SENDS $M$-TH FIRST-MESSAGE WITH RANDOM TRANSMISSION POWER

. . .

S704, GENERATE KEY OF TARGET TAG

TARGET SECOND MESSAGE

S705, SEND TARGET SECOND MESSAGE TO READER

S706, READER RECEIVES TARGET SECOND MESSAGE, AND DETERMINES $M$ RECEIVED STRENGTH ESTIMATION VALUES OF TARGET TAG BASED ON TARGET SECOND MESSAGE

S707, READER OBTAINS VERIFICATION KEY FOR TARGET TAG BASED ON $M$ RECEIVED STRENGTH ESTIMATION VALUES OF TARGET TAG AND $M$ QUANTIZATION OFFSETS OF TARGET TAG

S709, READER SENDS TARGET THIRD MESSAGE TO TARGET TAG, WHERE TARGET THIRD MESSAGE CONTAINS CALCULATION INFORMATION OF GROUP KEY FOR TARGET TAG

NO

YES

S708, VERIFICATION

BROADCAST ERROR FLAG

S710, TARGET TAG OBTAINS GROUP KEY BY PERFORMING XOR OPERATION BASED ON CALCULATION INFORMATION OF GROUP KEY FOR TARGET TAG AND KEY OF TARGET TAG

S711, TARGET TAG SEND TARGET RESPONSE MESSAGE TO READER, WHERE TARGET RESPONSE MESSAGE CARRIES TARGET SPECIFIED INFORMATION ENCRYPTED WITH GROUP KEY

FIG. 7

**EP 4 679 764 A1**

FIG. 8

FIG. 9

```
┌──────────┐                                          ┌──────────┐
│  READER  │                                          │  TAG 3   │
└────┬─────┘                                          └────┬─────┘
     │                                                     │
     │  S1001, READER SENDS M NEW FIRST MESSAGES EACH      │
     │         WITH RANDOM TRANSMISSION POWER              │
     │ ──────────────────────────────────────────────────►│
     │                                          ┌──────────┴──────────┐
     │                                          │ S1002, GENERATING KEY│
     │                                          └──────────┬──────────┘
     │        S1003, SENDING FIFTH MESSAGE TO READER       │
     │ ◄───────────────────────────────────────────────── │
┌────┴──────────────────┐                                  │
│ S1004, DETERMINING     │                                 │
│ VERIFICATION KEY FOR   │                                 │
│ TAG 3                  │                                 │
└────┬──────────────────┘                                  │
┌────┴────────────────────────┐                            │
│ S1005, GENERATING SECOND     │                           │
│ UPDATED GROUP KEY BASED ON   │                           │
│ KEY OF EACH OF N TAGS AND    │                           │
│ THE KEY OF TAG 3             │                           │
└────┬────────────────────────┘                            │
     │  S1006, SENDING N+1 SECOND UPDATED INFORMATION      │
     │ ──────────────────────────────────────────────────►│
     │                                       ┌─────────────┴────────┐
     │  S1008, SENDING NEW RESPONSE MESSAGE, │ S1007, OBTAINING     │
     │  WHERE NEW RESPONSE MESSAGE AT LEAST  │ SECOND UPDATED       │
     │  CARRIES EPC ENCRYPTED WITH GROUP KEY │ GROUP KEY            │
     │ ◄──────────────────────────────────── └─────────────┬───────┘
     │                                                     │
```

FIG. 10

FIG. 11

FIG. 12

FIG. 13

FIG. 14

TARGET SECOND DEVICE

SECOND COMMUNICATION UNIT 1501

SECOND PROCESSING UNIT 1502

FIG. 15

COMMUNICATION DEVICE 1600

MEMORY 1616

PROCESSOR 1610

TRANSCEIVER 1630

FIG. 16

CHIP 1700

INPUT
INTERFACE
1730

PROCESSOR
1710

MEMORY
1720

OUTPUT
INTERFACE
1740

FIG. 17

COMMUNICATION SYSTEM 1800

FIRST DEVICE —1810

TARGET SECOND
DEVICE —1820

FIG. 18

# INTERNATIONAL SEARCH REPORT

International application No.

**PCT/CN2023/080938**

### A. CLASSIFICATION OF SUBJECT MATTER

H04L9/08(2006.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, ENTXT, ENTXTC, WPABS, IEEE: 组, 群, 共享, 密钥, 标签, 阅读器, 读写器, 强度, 校验, 认证, 验证, reader, tag, shar???, group, key, RSSI, validat+, verify

### C. DOCUMENTS CONSIDERED TO BE RELEVANT

| Category* | Citation of document, with indication, where appropriate, of the relevant passages | Relevant to claim No. |
|---|---|---|
| Y | CN 106603228 A (GUANGDONG UNIVERSITY OF TECHNOLOGY) 26 April 2017 (2017-04-26)<br>description, paragraphs 0032-0067 | 1-2, 9-14, 18-29, 32-38, 45-50, 54-65, 68-78 |
| Y | CN 105187203 A (INSTITUTE OF INFORMATION ENGINEERING, CHINESE ACADEMY OF SCIENCES et al.) 23 December 2015 (2015-12-23)<br>description, paragraphs 0005-0042 | 1-2, 9-14, 18-29, 32-38, 45-50, 54-65, 68-78 |
| A | CN 1599485 A (HUAWEI TECHNOLOGIES CO., LTD.) 23 March 2005 (2005-03-23)<br>entire document | 1-78 |
| A | CN 105721142 A (GUANGDONG UNIVERSITY OF TECHNOLOGY) 29 June 2016 (2016-06-29)<br>entire document | 1-78 |
| A | CN 113365270 A (WANG YUNSEN) 07 September 2021 (2021-09-07)<br>entire document | 1-78 |
| A | US 2012057702 A1 (MINEMATSU, K.) 08 March 2012 (2012-03-08)<br>entire document | 1-78 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 October 2023** | **13 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/080938**

| C. | DOCUMENTS CONSIDERED TO BE RELEVANT | |
|---|---|---|
| Category* | Citation of document, with indication, where appropriate, of the relevant passages | Relevant to claim No. |
| A | US 2016034728 A1 (IMPINJ, INC.) 04 February 2016 (2016-02-04)<br>entire document | 1-78 |

Form PCT/ISA/210 (second sheet) (July 2022)

**INTERNATIONAL SEARCH REPORT**
Information on patent family members

International application No.

**PCT/CN2023/080938**

| Patent document cited in search report | | | Publication date (day/month/year) | Patent family member(s) | | | Publication date (day/month/year) |
|---|---|---|---|---|---|---|---|
| CN | 106603228 | A | 26 April 2017 | None | | | |
| CN | 105187203 | A | 23 December 2015 | None | | | |
| CN | 1599485 | A | 23 March 2005 | None | | | |
| CN | 105721142 | A | 29 June 2016 | None | | | |
| CN | 113365270 | A | 07 September 2021 | None | | | |
| US | 2012057702 | A1 | 08 March 2012 | WO | 2010131563 | A1 | 18 November 2010 |
| US | 2016034728 | A1 | 04 February 2016 | None | | | |

Form PCT/ISA/210 (patent family annex) (July 2022)